(19) Europäisches Patentamt
European Patent Office
Office européen des brevets

(11) **EP 2 667 015 A2**

(12) **EUROPÄISCHE PATENTANMELDUNG**

(43) Veröffentlichungstag:
**27.11.2013  Patentblatt 2013/48**

(51) Int Cl.:
***F03B 13/08*** *(2006.01)*      ***F03B 17/02*** *(2006.01)*

(21) Anmeldenummer: **13168512.5**

(22) Anmeldetag: **21.05.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **22.05.2012   DE 102012010016**

(71) Anmelder: **Ludwig, Horst**
**38442 Wolfsburg (DE)**

(72) Erfinder: **Ludwig, Horst**
**38442 Wolfsburg (DE)**

(74) Vertreter: **Einsel, Martin**
**Patentanwälte Einsel & Kollegen**
**Jasperallee 1a**
**38102 Braunschweig (DE)**

(54)    **Vorrichtung zur Energiegewinnung**

(57)    Es wird eine Energieerzeugungsvorrichtung (10) zur Energiegewinnung durch Ausnutzung eines hydrostatischen Druckes in einer Flüssigkeit vorgeschlagen, die mindestens eine Energieerzeugungsanlage (12) mit einem Druckerzeugungsbehälter (16) und einem Energieerzeugungszylinder (18), sowie eine Flüssigkeits-Hebeanlage (14) aufweist.

Aus der Energieerzeugungsanlage (12) muss nach jedem Hub des Arbeitszylinders (18) Flüssigkeit in die Flüssigkeits-Hebeanlage (14) abgelassen werden. Diese Flüssigkeitsmenge wird in der Hebeanlage (14) angehoben und der Energieerzeugungsanlage (12) erneut zugeführt. Das Anheben der Flüssigkeit wird in der Hebanlage (14) mittels eines waagerechten und eines senkrechten Zylinders (30, 32) realisiert. Die Rückführung des senkrechten Zylinders (32) in die Ausgangsstellung für einen neuen Hebelauf erfolgt mittels eines hinsichtlich seiner Größe und Form, sowie hinsichtlich seiner Höhenposition innerhalb der Flüssigkeit, variablen Schwimmers (34), der unter Ausnutzung des hydrostatischen Druckes in Flüssigkeiten eine Rückführung bei geringer externer Energiezuführung ermöglicht, wodurch ein Energiegewinn erzielt wird.

Fig. 1

## Beschreibung

### Gebiet der Erfindung

Die vorliegende Erfindung betrifft eine Vorrichtung zur Energiegewinnung durch Ausnutzung des hydrostatischen Druckes in Flüssigkeiten.

### Stand der Technik

Die Hydrostatik beschäftigt sich mit unbewegten, insbesondere strömungsfreien Flüssigkeiten. Wird beispielsweise ein Körper in eine Flüssigkeit gebracht, so ist der Druck an der Unterseite höher als an der Oberseite. Die resultierende Kraft ist nach oben gerichtet und wird als Auftrieb bezeichnet. Diese Auftriebskraft entspricht der Gewichtskraft der verdrängten Flüssigkeit (Archimedisches Prinzip). Ist die durchschnittliche Dichte eines Körpers kleiner als die der Flüssigkeit, so überwiegt die Auftriebskraft gegenüber der Gewichtskraft. Wirken dann nicht noch andere Kräfte auf ihn ein, steigt der Körper nach oben und schwimmt. Ist seine Dichte hingegen größer als die Flüssigkeit, sinkt der Körper nach unten, bei gleicher Dichte schwebt er.

Eine Vorrichtung zur Energiegewinnung mit hydrostatischem Druck wird beispielsweise in der DE 20 2007 010 685 U1 beschrieben. Die Idee dieser Vorrichtung besteht darin, die Auftriebskraft von mit Luft gefüllten Hohlkörpern in einem Wasserbehälter zur Energiegewinnung zu nutzen. Dazu weist diese Vorrichtung mindestens zwei mittels Luft befüllbare Hohlkörper auf, die in einem Wasserbehälter zwischen einer unteren Befüllstellung und einer oberen Entlüftungsstellung verlagerbar angeordnet sind. Dabei ist eine erste Luftfülleinheit über eine erste Leitung mit dem ersten Hohlkörper verbunden, der über eine erste Hub- oder Druckstange mit einer zweiten Luftfülleinheit in Wirkverbindung steht, die über eine zweite Leitung mit dem zweiten Hohlkörper verbunden ist, der über eine zweite Hub- oder Druckstange mit der ersten Luftfülleinheit in einer Wirkverbindung steht.

Zwei andere Schriften DE 10 2007 060 449 A1 und DE 10 2007 063 509 A1 beschreiben eine Vorrichtung, die eine gewerbliche Nutzung der hydrostatischen Energie des Wassers ermöglichen soll. Dazu besteht die Anlage aus zwei übereinander angeordneten Kammern mit getrennten Wasserkreisläufen, zum einen dem hydrostatischen Druckwasser, zum anderen dem für die Energiegewinnung notwendigen Fließwasser. Das Wasser aus der oberen Kammer fließt ventilgesteuert in einen in der unteren Kammer befindlichen Trog, der ein Absenkrohr auf den Boden der unteren Kammer bewegt, um die im Wasser befindliche Auftriebskraft abzuschirmen. Im Rohr wirkt dann nur noch die Auftriebskraft proportional zum darin befindlichen Wasser. Ein mit Wasser wassergefüllter Balg kann darin abgesenkt werden. Wenn der Balg den Boden erreicht, wird das Absenkrohr nach oben geöffnet, worauf der gesamte Wasserdruck der unteren Kammer auf den Balg wirkt und diesen nach oben zusammenpresst. Dieses Zusammenpressen bewirkt im Innern des Balges eine starke Fließwirkung des darin befindlichen Wassers, das dadurch in die obere Kammer gepresst wird und dort von einem Wasserrad bzw. einer Turbine in eine Drehbewegung umgewandelt wird. Anschließend fließt dieses Wasser in die obere Kammer zurück. Die Drehbewegung wird auf ein Schwungrad übertragen und kann von dort beispielsweise zum Antrieb eines Generators verwendet werden.

Die Vorschläge aus dem Stand der Technik sind recht aufwändig und die Effektivität der vorgeschlagenen Anlagen scheint nicht in jedem Anwendungsfall gut zu sein.

### Aufgabe

Aufgabe der vorliegenden Erfindung ist es, eine Vorrichtung und ein Verfahren anzugeben, wodurch es ermöglicht wird, unter Ausnutzung des hydrostatischen Druckes der natürlichen Bodenkraft in einer Flüssigkeit eine Bewegungsenergie zu erzeugen und mittels möglichst geringer externer Energiezufuhr hierbei einen kontinuierlichen zyklischen Ablauf zu realisieren bzw. aufrechtzuerhalten.

### Lösung

Diese Aufgabe wird gelöst durch die Vorrichtung und das Verfahren nach den Ansprüchen 1 und 8, sowie ergänzend durch vorteilhafte Weiterbildungen gemäß den Unteransprüchen.

Es wird eine Energieerzeugungsvorrichtung zur Energiegewinnung durch Ausnutzung eines hydrostatischen Druckes in einer Flüssigkeit vorgeschlagen, die mindestens eine Energieerzeugungsanlage mit einem Druckerzeugungsbehälter und einem Energieerzeugungszylinder aufweist.

Weiterhin gehört zu der Energieerzeugungsvorrichtung mindestens eine Flüssigkeits-Hebeanlage (in den weiteren Darlegungen auch als "Hebeanlage" bezeichnet) für ein Anheben und Rückführen von Flüssigkeit in die Energieerzeugungsanlage mit:

- einem oberen waagerechten Zylinder und einem unteren senkrechten Zylinder, wobei der obere waagerechte Zylinder und der untere senkrechte Zylinder mittels eines Verbindungselementes fest miteinander verbindbar sind;
- einem variablen Schwimmer (im Weiteren auch als Schwimmkörper bezeichnet);
- einer Schwimmerverfahreinheit;
- einem Steigrohr mit einem Sperrventil; und

einer beweglichen Luftzufuhreinheit für den variablen Schwimmer.

Zwischen der Energieerzeugungsanlage und der Flüssigkeits-Hebeanlage ist ein Auslauf für ein Abführen einer Flüssigkeitsmenge aus der Energieerzeugungsanlage in die Flüssigkeits-Hebeanlage vorhanden.

Für ein erneutes Einbringen einer Flüssigkeitsmenge aus der Flüssigkeits-Hebeanlage in die Energieerzeugungsanlage ist zwischen dem Steigrohr der Flüssigkeits-Hebeanlage und der Energieerzeugungsanlage ein Überlauf vorhanden.

Die Flüssigkeits-Hebeanlage ist derart ausgestaltet, dass mittels einer Antriebsvorrichtung die Ausführung eines Hubes des oberen waagerechten und des unteren senkrechten Zylinders bewirkt wird, wobei eine aus der Energieerzeugungsanlage in die Flüssigkeits-Hebeanlage abgeführte Flüssigkeitsmenge in das Steigrohr gedrückt wird und von dort durch den Überlauf erneut in die Energieerzeugungsanlage einbringbar ist.

Die Flüssigkeits-Hebeanlage ist außerdem derart ausgestaltet, dass mittels des variablen Schwimmers ein Rückführen (Anheben) des unteren senkrechten Zylinders in eine Ausgangsposition für einen erneuten Hebelauf erfolgt.

Der variable dabei Schwimmer ist derart ausgebildet, dass er dazu mit dem senkrechten Zylinder verbindbar ist.

Bezüglich Form und Größe ist er veränderbar, wodurch mittels seiner Anwendung ein Anheben des unteren senkrechten Zylinders in die Ausgangsposition für einen erneuten Flüssigkeits-Hebevorgang bei einem nur geringen externen Energiebedarf realisierbar ist.

Zur Erfindung gehört auch ein Verfahren zur Energiegewinnung durch Ausnutzung eines hydrostatischen Druckes in Flüssigkeiten in einer Energieerzeugungsvorrichtung, die mindestens eine Energieerzeugungsanlage und mindestens eine Flüssigkeits-Hebeanlage aufweist.

Das Verfahren wird mit folgenden Schritte ausgeführt:

a) in der mit einer Flüssigkeit angefüllten Energieerzeugungsanlage führt ein Energieerzeugungszylinder einen definierten Hub aus;

a1) wobei der Hub durch eine in der Energieerzeugungsanlage mittels eines druckerzeugenden Zylinders realisierte Bodenkraft und/oder Seitenkraft und/oder Aufdruckkraft bewirkt wird;

a2) wobei beim Ausführen des Hubes durch den Energieerzeugungszylinder eine Arbeit vollbracht wird und eine Bewegungsenergie erzeugt wird;

a3) wobei die von der Energieerzeugungsanlage erzeugte Bewegungsenergie an eine angekoppelten externe Vorrichtung, vorzugsweise einen Generator zur Erzeugung einer elektrischen Energie, übertragen wird;

b) nach dem Ausführen des Hubes durch den Energieerzeugungszylinder erfolgt über einen Auslauf ein Abführen einer definierten Flüssigkeitsmenge aus der Energieerzeugungsanlage in die mit Flüssigkeit, beispielsweise Wasser gefüllte Flüssigkeits-Hebeanlage;

c) in der Flüssigkeits-Hebeanlage wird mittels eines Antriebes ein Hub eines waagerechten Zylinders und eines mit dem waagrechten Zylinder verbundenen senkrechten Zylinders bewirkt, wodurch ein Anheben der Flüssigkeit in der Flüssigkeits-Hebeanlage erfolgt;

c1) wobei die beiden Zylinder vor Ausführung des Hubes in einer dafür definierten Ausgangsposition angeordnet waren;

d) über ein Steigrohr erfolgt eine Rückführung von Flüssigkeit aus der Flüssigkeits-Hebeanlage in den druckerzeugenden Zylinder der Energieerzeugungsanlage;

d1) wobei die für die Rückführung angehobenen Flüssigkeitsmenge der aus der Energieerzeugungsanlage abgeführten Flüssigkeitsmenge entspricht;

e) der waagerechte und der senkrechte Zylinder werden wieder in eine Ausgangsposition für eine erneute Ausführung eines Hubes bewegt;

e1) wobei das Bewegen des senkrechten Zylinders in die Ausgangsposition mittels eines nach Form und Größe variablen, nahezu schwerelos ausgebildeten Schwimmers erfolgt; ein Anheben der Flüssigkeit zwecks einer Rückführung in die Energieerzeugungsanlage bewirkt

e2) wobei für das Bewegen des senkrechten Zylinders in die Ausgangsposition der variable Schwimmer mit dem senkrechten Zylinder verbunden und des variablen Schwimmers nur eine geringe externe Energie zugeführt werden muss, zusammen mit dem senkrechten Zylinder nach oben in die Ausgangsposition bewegt wird.

Die Schritte a) bis e) werden nach erfolgter Einnahme der Ausgangsposition durch den waagerechten und durch den senkrechten Zylinder erneut ausgeführt.

Bei dem in der Hebeanlage befindlichen variablen Schwimmer ist kann sowohl seine Form und Größe verändert werden, aber auch seine Position (Höhe) innerhalb der Flüssigkeit ist durch ein Hochfahren bzw. Absenken des Schwimmers veränderbar.

Bei der oben beschriebenen Energieerzeugungsvorrichtung erfolgt eine Energiegewinnung auf der Basis der Ausnutzung des in Flüssigkeiten vorhandenen hydrostatischen Druckes. Dabei muss bei der Energieerzeugung eine Arbeit vollbracht werden

Diese Arbeit wird durch den Energieerzeugungszylinder (Arbeitszylinder) der Energieerzeugungsanlage vollbracht. Die Arbeit entsteht dadurch, dass in der mit Flüssigkeit angefüllten Energieerzeugungsanlage eine Bodenkraft vorhanden ist, die einen Hub (eine nach Richtung und Weg definierte Bewegung) des Energieerzeugungszylinders bewirkt.

Der Energieerzeugungszylinder befindet sich in einem absperrbaren Bereich, der unter einem druckerzeugenden Behälter (Druckerzeugungszylinder) angeordnet ist. An Stelle eines Zylinders ist auch die Verwendung eines anderen Elementes, beispielsweise eines zusammendrückbaren Balgs, möglich.

Nach jedem Hub muss aus der Energieerzeugungsanlage eine bestimmte Flüssigkeitsmenge ablaufen. Das ist erforderlich, damit der Energieerzeugungszylinder wieder in die Ausgangsstellung gebracht werden kann. Der druckerzeugende Behälter muss jedoch bei jedem Hub wieder mit der verlorenen Flüssigkeit aufgefüllt werden, damit immer die gleiche Ausgangshöhe für die gleiche Bodenkraft erreicht wird.

Um einen zyklischen Ablauf des Systems zu realisieren, ist es zweckmäßig, eine Mehrzahl dieser druckerzeugenden Behälter mit jeweils einem dazugehörigen Energieerzeugungszylinder so in Reihe anzuordnen, dass man damit eine Drehbewegung eines Energiewandlers, beispielsweise eines mit der Energieerzeugungsanlage gekoppelten Generators, erzeugen kann.

Bei der Erfindung wird der hydrostatische Druck der natürlichen Bodenkraft in einer Flüssigkeit, bevorzugt in Wasser, ausgenutzt, um mit möglichst geringer zugeführter Energie eine Bewegungsenergie zu erzeugen und dadurch einen kontinuierlichen zyklischen Ablauf des Prozesses zu realisieren bzw. aufrechtzuerhalten.

Es kann hierbei der Bodendruck in der Flüssigkeit ausgenutzt werden, aber man kann den Energieerzeugungszylinder (Arbeitszylinder) auch waagerecht oder von unten nach oben bewegen. Dabei kann dann auch eine Ausnutzung des in der Flüssigkeit wirkenden Seitendruckes oder der Aufdruckkraft erfolgen.

Die Rückführung der aus der Energieerzeugungsanlage abgelassenen Flüssigkeit erfolgt mittels Ausnutzung von Formänderung in Flüssigkeiten.

Durch den Unterschied von festen zu flüssigen Körpern ist eine Formänderung bei flüssigen Körpern ohne Kraftaufwand möglich, wenn man von erforderlichen Zusatzbedingungen absieht, und beispielsweise den raschen Formwechsel (Viskosität) nicht berücksichtigt.

Zu beachten ist hierbei, dass Flüssigkeiten keinen Widerstand gegen eine Formänderung zeigen, jedoch einen großen Widerstand gegen eine Volumenänderung. Durch die Schaffung von zwei unterschiedlichen Druckverhältnissen in einem Bereich, ist es möglich, diese Formänderung mit geringen Zusatzkräften zu ermöglichen.

Die erfindungsgemäße Rückführungsanlage (Flüssigkeits-Hebeanlage) dazu besteht aus einem mit Flüssigkeit angefüllten Gefäß, welches zwei Zylinder (einen oberen waagerechten und einen unteren senkrechten Zylinder) aufweist, die über ein Verbindungselement miteinander verbunden sind.

Die Funktionsweise der Rückführungsanlage (Flüssigkeits-Hebeanlage) besteht nun darin, dass die beiden miteinander verbundenen Zylinder eine Hubbewegung machen, wobei der obere Zylinder in das Gefäß hinein bewegt wird, während dabei der untere Zylinder abwärts bewegt wird. Auf Grund der voneinander unterschiedlichen Durchmesser der Zylinder entsteht ein Differenz-Volumen, d. h. ein Volumen, welches dann das Überlaufen am oberen Ende des Steigrohres bewirkt. Die Hubbewegung erfolgt mittels einer zugefügten Kraft, oder man dimensioniert die Anlage so, dass ein Überdruck seitens des unteren senkrecht angeordneten Zylinders entsteht.

Somit bildet der Druckbereich vom unteren Zylinder bis zum Überlauf denjenigen Druckbereich der Flüssigkeits-Hebeanlage, welcher die Rückführung der Flüssigkeit aus der Hebeanlage in die Energieerzeugungsanlage bewirkt.

Wird nun der obere Bereich der Flüssigkeits-Hebeanlage, nämlich das Steigrohr, mittels eines Absperrventils geschlossen und der untere Bereich, nämlich das Gefäß an sich, mit einem Entlüftungsventil geöffnet, dann entsteht eine neue Druckhöhe, ein zweites Druckverhältnis.

Dieser Vorgang ist aber nur einmal möglich, da zwar der obere seitliche Zylinder problemlos in seine Ausgangsposition zurück bewegt werden kann, jedoch ist ein Hochfahren (eine Aufwärtsbewegung) des unteren senkrechten Zylinders zu seiner Rückführung in die Ausgangsposition für eine weiteren Hebevorgang wegen des auf ihn wirkenden großen Druckes nicht ohne einen sehr großen Kraftaufwand realisierbar.

Daher ist es zweckmäßig, wenn nun ein Abkoppeln des unteren senkrechten Zylinders und ein Zurückfahren des oberen seitlich angeordneten Zylinders erfolgt. Das Abkoppeln ist jedoch nicht Voraussetzung. Es kann hierbei auch Vorgehensweisen geben, bei denen das Zurückführen des unteren Zylinders auch ohne Abkoppeln erfolgt.

Für das Hochfahren des unteren senkrechten Zylinders wird nun der variable Schwimmer eingesetzt. Er ist nahezu schwerelos konzipiert. Daher ist er ohne einen großen zusätzlichen Kraftaufwand, auf- und abwärts bewegbar.

Der variable Schwimmer wird nun in auseinander gefahrenem Zustand auf den unteren Zylinder gefahren und mit ihm starr verbunden. Für das nun folgende Zusammenfahren des Schwimmers (ineinander Verschieben des Oberteils des Schwimmers in das Unterteil) wird die Position des Schwimmeroberteils mittels einer Arretierung fixiert. Danach wird eine Luftöffnung von unten durch den senkrechten Zylinder geschaffen, damit beim Zusammenfahren des Schwimmers die vorhandene Luft nach unten ausweichen kann.

Durch das Zusammenschieben (Zusammenfahren) des variablen Schwimmers ist keine Volumenänderung in der Flüssigkeit eingetreten. Lediglich ist der Schwimmer kleiner geworden.

Zweckmäßiger Weise sollte der variable Schwimmer einen, bezogen auf den Durchmesser des unteren senkrechten Zylinders der Hebeanlage, gleichen Durchmesser aufweisen.

In einer anderen vorteilhaften Ausführung kann, der variable Schwimmer aber auch einen, bezogen auf den Durchmesser des unteren senkrechten Zylinders der Flüssigkeits-Hebeanlage, größeren Durchmesser aufweisen.

Damit könnte man das zwar das Hochfahren des unteren Zylinders erleichtern, was aber zur Folge hat, dass dann hinsichtlich des Schwimmers bei der Abwärts- und Aufwärtsbewegung Nachteile wegen des größeren Bewegungswiderstandes auftreten. Daher ist eine genaue Berechnung erforderlich, um diesbezüglich eine möglichst optimale Situation zu erreichen.

Nachdem nun die Luftöffnung wieder geschlossen wurde, wird die Verbindung zwischen dem Schwimmer und dem unteren Zylinder gelöst und der untere Zylinder etwas zurück gefahren, beispielsweise um einige Millimeter, bis auf einen Anschlag, damit er nicht durch den Bodendruck vollständig abwärts fährt.

Damit hat der Schwimmer jetzt wieder einen unteren Bodendruck und kann nach oben bewegt werden.

Im oberen Bereich der Anlage befindet sich das verschiebbare Luftzufuhrrohr. Dieses wird mit dem oberen Boden des Schwimmers verbunden und es entsteht eine Luftverbindung bis zum unteren Luftbereich des Schwimmers. Dadurch kann nun mittels des Luftzufuhrrohres der Schwimmer wieder auseinander gezogen werden, und somit wurde das Wasservolumen, welches beim Hochfahren des unteren Zylinders entstehen würde, in den oberen Bereich verlegt. Ursache hierfür ist der wesentlich geringere Bodendruck beim

Auseinanderfahren des Schwimmers im oberen Bereich.

In der oberen Position des Schwimmers werden Schwimmer-Ober- und Unterteil nun im ausgefahrenen Zustand wieder starr miteinander verbunden und das Luftzufuhrrohr wird abgekoppelt.

Das Auseinanderziehen des Schwimmers kann hierbei auf zweierlei Weise erfolgen. Entweder wird das das Schwimmer-Unterteil nach unten gezogen, oder das Schwimmer-Oberteil nach oben.

In der Zwischenzeit wurde der untere Zylinder wieder mit dem oberen Zylinder verbunden. Hierbei können etliche Konstruktionshilfen für das Erzielen eines möglichst geringen Kraftaufwands zur Anwendung kommen.

Zur Realisierung eines konstanten Rückführdrucks kann gegenüber dem waagerechten Zylinder auch noch ein zusätzlicher Zylinder als Volumenausgleichszylinder zum Ausgleichen des Volumenunterschiedes hinzugefügt werden, wobei dieser Zylinder nach erfolgtem Rückführen der Flüssigkeit wieder zurückgefahren wird.

Über das das Zulaufventil kann nun wieder erneut die zu fördernde Flüssigkeit aus der Energieerzeugungsanlage einfließen und ein neuer Hebeablauf beginnen.

Die Flüssigkeits-Hebeanlage der Energieerzeugungsvorrichtung kann in einer vorteilhaften Ausführung auch derart ausgestaltet sein, dass sie eine Untersetzung des Hubes des senkrechten unteren Zylinders in Bezug auf den Hub des oberen waagerechten Zylinders aufweist, und zwar bei gleicher verrichteter Arbeit.

Hierbei ist es von Vorteil, dass sich durch die Untersetzung des senkrechten Hubes eine Gewichtseinsparung beim Schwimmer und beim unteren senkrechten Zylinder erreichen lässt.

In einer vorteilhaften Ausführung der Erfindung kann bei der Energieerzeugungsvorrichtung jeweils eine Energieerzeugungsanlage auch eine Mehrzahl von zugeordneten Flüssigkeits-Hebeanlagen aufweisen.

Zweckmäßig ist es auch, wenn die Energieerzeugungsvorrichtung eine Mehrzahl von Energieerzeugungsanlagen und eine Mehrzahl von zugeordneten Flüssigkeits-Hebeanlagen aufweist, wobei die mehreren Energieerzeugungsanlagen in Reihe miteinander gekoppelt sind.

Jeder der Energieerzeugungsanlagen ist dabei mindestens eine Flüssigkeits-Hebeanlage zugeordnet

Mittels dieser Anordnung einer Mehrzahl von Energieerzeugungsanlagen ist eine Drehbewegung, beispielsweise eines an die Energieerzeugungsvorrichtung gekoppelten Generators, zur Erzeugung von elektrischer Energie realisierbar. Es kann dadurch ein zyklischer Ablauf realisiert werden und dabei eine Drehbewegung eines an die Energieerzeugungsvorrichtung gekoppelten externen Energiewandlers, vorzugsweise eines Generators, bewirkt werden.

Besonderer Vorteil der Erfindung ist es, dass unter Anwendung von hydrostatischem Druck und unter Anwendung der Verschiebbarkeit der Teilchen in Flüssigkeiten, sowie mit Hilfe von zugefügter Energie die Anlage in der Lage ist, eine Energiegewinnung zu realisieren. Durch die Ausnutzung des hydrostatischen Druckes der natürlichen Bodenkraft in einer Flüssigkeit kann Bewegungsenergie mit möglichst geringer zugeführter Energie erzeugt werden und dadurch ein kontinuierlicher zyklischer Ablauf zu realisiert bzw. aufrecht erhalten werden.

Der ökonomische Nutzen wird hierbei insbesondere durch den geringen zusätzlichen Kraftaufwand beim Anheben einer definierten Flüssigkeitsmenge mittels der Flüssigkeits-Hebeanlage erreicht. Daher ist die Erfindung auch in verschiedenen Bereichen der Energiegewinnung anwendbar, beispielsweise zur Erzeugung mechanischer bzw. elektrischer Energie.

Weitere Einzelheiten und Merkmale ergeben sich aus der nachfolgenden Beschreibung eines bevorzugten Ausführungsbeispiels in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf das Ausführungsbeispiel beschränkt.

Die Ausführungsbeispiele sind in den Figuren schematisch dargestellt.

Im Einzelnen zeigt:

**Figur 1** eine Prinzip-Darstellung der Energieerzeugungsvorrichtung;

**Figur 2** eine Prinzip-Darstellung einer Energieerzeugungsanlage mit einer Mehrzahl von Energieerzeugungszylindern (Ansichten 2A bis 2D);

**Figur 3** eine Darstellung des Flüssigkeits-Hebeprinzips (Stand der Technik);

**Figur 4** eine Darstellung der erforderlichen Elemente eines Ausführungsbeispiels der Flüssigkeits-Hebeanlage

**Figur 5** eine Darstellungen der Flüssigkeits-Hebeanlage in zwei Ansichten mit Anordnung des variablen Schwimmers, der Schwimmerverfahreinheit und mit der Zylinderanbindung (Ansichten 5A und 5B, jeweils um 90° zueinander gedreht);

**Figur 6** in drei Ansichten (Ansichten 6A bis 6C) eine Ablauffolge für die Positionen des oberen und des unteren Zylinders;

**Figur 7** eine Darstellung des variablen Schwimmers bei der Aufwärts- und Abwärtsbewegung (Ansichten 7A und 7B)

**Figur 8** Draufsichten auf den variablen Schwimmer bei der Aufwärts- und Abwärtsbewegung (Ansichten 8A und 8B)

**Figur 9** eine Darstellung von Position und Zustand des variablen Schwimmers (Ablauffolge 1)

**Figur 10** eine Darstellung von Position und Zustand des variablen Schwimmers (Ablauffolge 2)

**Figur 11** eine Darstellung von Position und Zustand des variablen Schwimmers (Ablauffolge 3)

**Figur 12** eine Darstellung von Position und Zustand des variablen Schwimmers (Ablauffolge 4)

**Figur 13** eine Darstellung von Position und Zustand des variablen Schwimmers (Ablauffolge 5)

**Figur 14** eine Darstellung von Position und Zustand des variablen Schwimmers (Ablauffolge 6)

**Figur 15** eine Darstellung von Position und Zustand des variablen Schwimmers (Ablauffolge 7)

**Figur 16** eine Darstellung der Vorgabenwerte für eine Anlagenberechnung

**Figur 17** detailliert eine Darstellung des ausgefahrenen variablen Schwimmers bei der Abwärtsbewegung

**Figur 18** detailliert eine Darstellung des zusammengefahrenen Schwimmers im Zustand bei der Aufwärtsbewegung

**Figur 19** eine Darstellung einer Flüssigkeits-Hebeanlage mit Untersetzung

**Figur 20** eine Darstellung einer Mehrfachhebeanlage

**Figur 21** eine Darstellung eines Anlagenlayouts einer Mehrfachhebeanlage

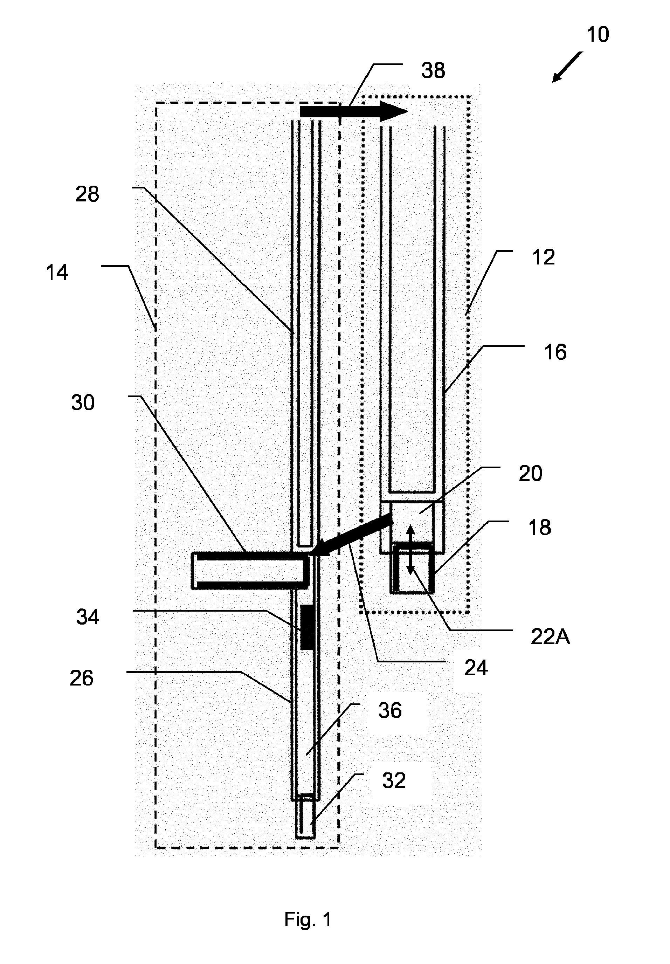

Die in **Figur 1** gezeigte Energieerzeugungsvorrichtung 10 besteht aus der Energieerzeugungsanlage 12 und der Flüssigkeits-Hebeanlage (Flüssigkeits-Rückführungsanlage) 14. Der Behälter der Energieerzeugungsanlage 12 weist einen druckerzeugenden Zylinder (Druckerzeugungszylinder, Druckerzeugungsbehälter) 16 und einen energieerzeugenden Zylinder (Energieerzeugungszylinder, Arbeitszylinder) 18 auf. Das erforderliche Abführen der Flüssigkeit aus dem Bereich 20 zwischen dem Druckerzeugungszylinder 16 und dem Energieerzeugungszylinder 18 nach dem Ausführen eines Hubes 22A des Arbeitszylinders 18 erfolgt über den Auslauf 24 in die Flüssigkeits-Hebeanlage 14.

Die Flüssigkeits-Hebeanlage 14 weist als wesentliche Elemente einen Behälter 26, ein Steigrohr 28, einen oberen waagerechten Zylinder 30, einen unteren senkrechten Zylinder 32 und den variablen Schwimmer 34 auf. Der Behälter 26 ist mit Flüssigkeit 36 angefüllt. Auch das Steigrohr 28 ist ebenso wie der Behälter 26 mit Flüssigkeit 36 gefüllt. Die Rückführung von Flüssigkeit in die Energieerzeugungsanlage 12 erfolgt nach dem Anheben durch das Steigrohr 28 der Hebeanlage 14 über den Überlauf 38.

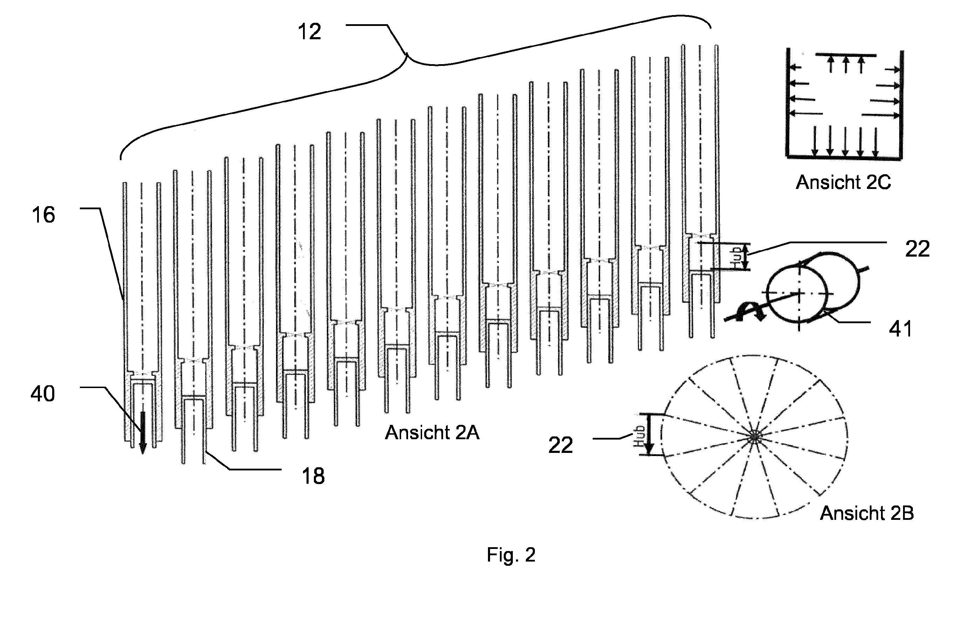

**Figur 2** zeigt eine Variante einer Energieerzeugungsanlage 12 mit einer Anordnung von 12 Behältern mit je einem druckerzeugenden Zylinder 16 und einem Energieerzeugungszylinder 18. Mittels der reihenweisen Anordnung der Behälter 12 lässt sich ein kontinuierlicher zyklischer Ablauf des Verfahrens realisieren. Zu jedem Behälter 12 gehört noch mindestens eine Hebanlage (nicht dargestellt).

Auf der Basis der Ausnutzung eines hydrostatischen Druckes ) in der Flüssigkeit, hier des Bodendruckes (s. Ansichten 2A und 2C), führt jeder der Arbeitszylinder 18 nacheinander in Pfeilrichtung 40 einen Hub 22A aus. Dadurch lässt sich eine Drehbewegung, beispielsweise eines mit dem System gekoppelten Generators 41 (s. Ansicht 2B), erzeugen, wobei der Hub 22A jedes Arbeitszylinders in diesem Beispiel jeweils ein Zwölftel einer vollen Umdrehung (s. Ansicht 2B), bewirkt. Die Arbeitszylinder 18 könnten in einer anderen beispielhaften Ausführung auch waagerecht oder von unten nach oben bewegt werden, wobei dann eine Ausnutzung des Seitendruckes bzw. der Aufdruckkraft (s. Ansicht 2C) erfolgen würde.

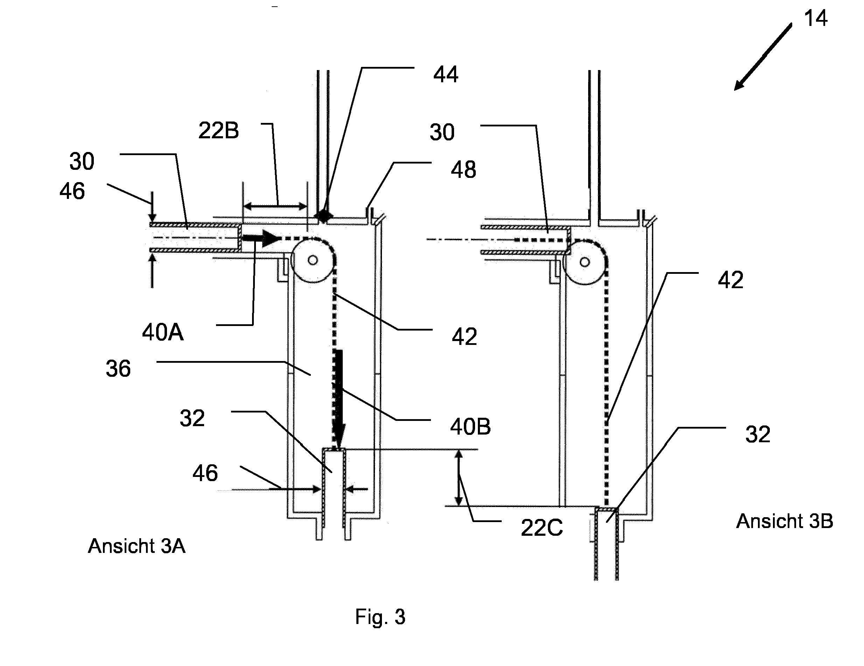

In **Figur 3** wird das Prinzip (Stand der Technik) des Flüssigkeits-Hebevorganges in der Flüssigkeits-Hebeanlage 14 gezeigt. Der waagerechte Zylinder 30 ist mit dem senkrechten Zylinder 32 über ein Verbindungselement 42 fest verbunden, wobei diese Verbindung lösbar ist. Beide Zylinder 30, 32 führen bei geöffnetem Steigrohr-Ventil 44 einen durch die Pfeilrichtung 40 gekennzeichneten Hub 22B, 22C aus, wobei sie beide den gleichen Weg zurücklegen. Bedingt durch den Höhenunterschied der beiden Zylinder 30, 32 kann der waagerechte Zylinder 30 einen größeren Durchmesser 46 als der senkrechte Zylinder 32 haben und dadurch ein größeres Volumen bewegen. Beide Zylinder 30, 32 verrichten jedoch die gleiche Arbeit. Das Volumen des oberen Zylinders 30 entspricht dabei der Summe aus dem Volumen des unteren Zylinders 32 und dem Fördervolumen der zu hebenden Flüssigkeit.

Die komplette Hebeanlage 14 ist bis oben mit Wasser 36 gefüllt. Der Zulauf 24 aus der Energieerzeugungsanlage ist geschlossen. Durch die Hubbewegung (Hub) 22 der Zylinder 30, 32 entsteht zunächst keine andere Druckhöhe, da das Mehr an Volumen bei geöffnetem Steigrohrventil 44 am oberen Ende des Steigrohres 28 abläuft. Danach kann das Ventil 44 am Steigrohr 28 geschlossen und das Entlüftungsventil 48 geöffnet werden.

Dadurch entsteht nun eine neue Druckhöhe. Die beiden Zylinder 30, 32 müssen nun wieder in die Ausgangsposition gebracht werden, jedoch ist das nicht ohne Weiteres möglich, da der Druck auf den senkrechten Zylinder 32 jetzt verhältnismäßig groß ist.

Hier bedarf es nun der Anwendung des variablen Schwimmers (nicht dargestellt), der derart ausgebildet ist, dass das Anheben des senkrechten Zylinders 32 mit geringer Kraft möglich wird.

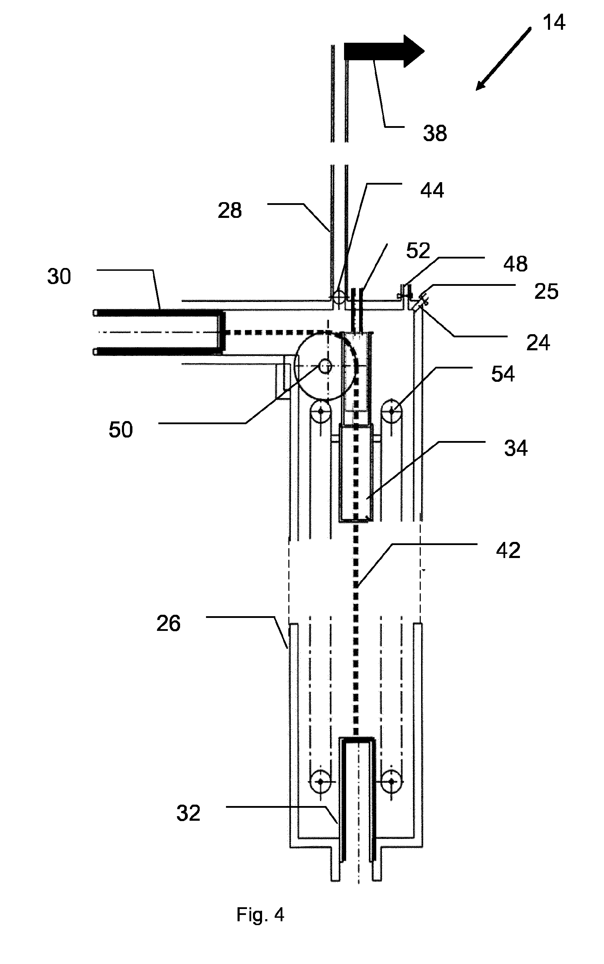

Die **Figur 4** stellt die für eine erfindungsgemäße Flüssigkeits-Hebeanlage 14 erforderlichen Elemente (Bauteile) dar.

Die Flüssigkeits-Hebeanlage 14 für das Anheben und Rückführen von Flüssigkeit in die Energieerzeugungsanlage 12 weist insbesondere folgende Elemente auf:

- einen Flüssigkeitsbehälter 26
- einen waagerechten Zylinder 30,
- einen senkrechten Zylinder 32,
- ein Verbindungselement 42 zwischen waagerechtem Zylinder 30 und senkrechtem Zylinder 32,
- Umlenkrollen 50 für Verbindungselement 42 zwischen waagerechtem Zylinder 30 und senkrechtem Zylinder 32,
- einen variablen Schwimmer 34,
- ein Steigrohr 28 mit Steigrohr-Sperrventil 44,
- einen Auslauf 24 aus der Energieerzeugungsanlage 12 / Einlauf in die Hebeanlage 14 mit Ventil 25,
- einen Überlauf 38 aus der Hebeanlage 14 in die Energieerzeugungsanlage 12,
- eine bewegliche Luftzufuhreinheit 52 für den variablen Schwimmer 34,
- ein Entlüftungsventil 48, und
- eine Schwimmer-Verfahreinheit 54.

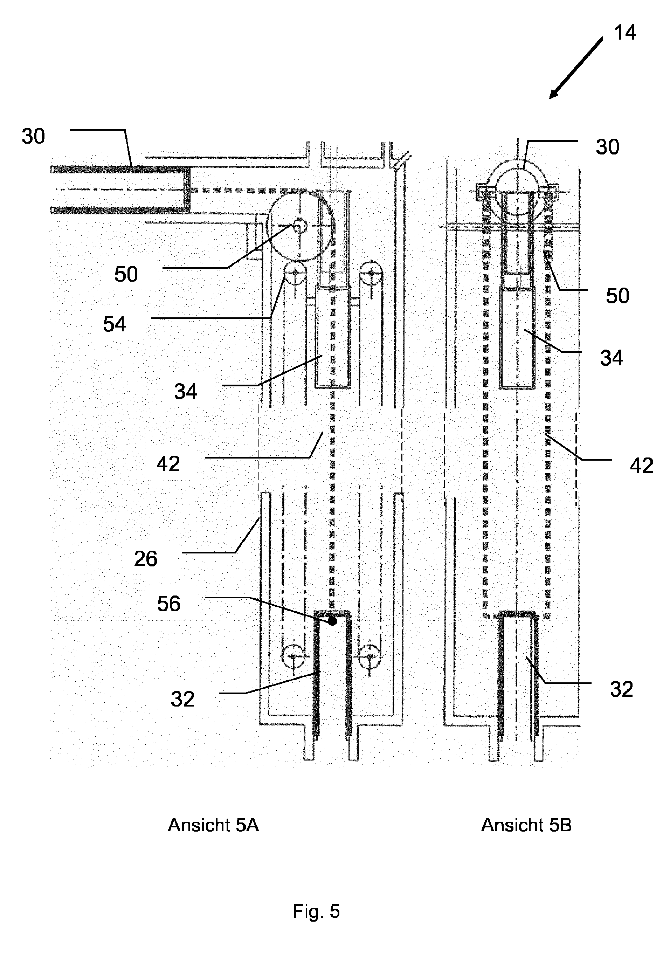

Die **Figur 5** zeigt eine Ansicht der Anordnung (Ansichten A und B, jeweils um 90° zueinander gedreht) des Schwimmers 34 mit der Schwimmerverfahreinheit 54 und der Zylinderanbindung 56. Aus der Figur 5 (siehe Ansicht 5A) ist ersichtlich, dass der Schwimmer 34 beim Absenken bzw. beim Hochfahren mittels der Schwimmerverfahreinheit 54 zwischen dem Verbindungselement 42 von waagerechtem und senkrechtem Zylinder 30, 32 entlang geführt wird. Bei einer Einzelrückführung der Zylinder 30, 32 kann die Verbindung 42 zwischen waagerechtem Zylinder 30 und senkrechtem Zylinder 32 an der Zylinderanbindung 56 am unteren Zylinder 32 gelöst werden.

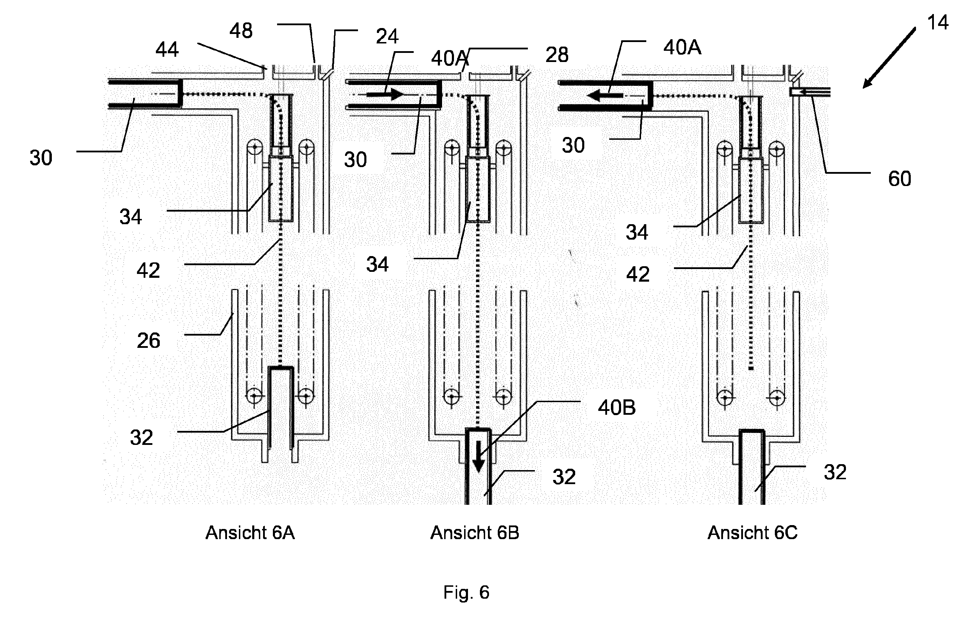

**Figur 6** zeigt in drei Ansichten (Ansichten A bis C) eine Ablauffolge für die Positionen des oberen und des unteren Zylinders 30, 32.

In **Ansicht 6A** befinden sich beide Zylinder 30, 32 in Startposition. Die Entlüftung 48 und das Einlassventil 25 sind geschlossen. Das Steigrohrventil 44 ist geöffnet.

In **Ansicht 6B** werden die beiden miteinander verbundenen Zylinder 30, 32 mittels eines Antriebes (nicht dargestellt) in Pfeilrichtung 40 bewegt. Bei diesem Vorgang wird die zu hebende Flüssigkeitsmenge in das Steigrohr 28 gedrückt. Danach kann der untere Zylinder 32 abgekoppelt werden. Das Abkoppeln ist jedoch nur erforderlich, wenn die Zylinder einzeln zurückgeführt werden.

In **Ansicht 6C** wird der obere Zylinder 30 bei Einzelrückführung in Pfeilrichtung 40 in die dargestellte Position zurück gefahren. Das Abkoppeln vom unteren Zylinder 32 ist jedoch nicht Bedingung. Ein Zurückfahren der beiden Zylinder 30, 32 kann auch gemeinsam durchgeführt werden, jedoch erst nach dem Aufsetzen des variablen Schwimmers 34 auf den unteren Zylinder 32. Zur Gewährleistung eines konstanten Rückführdrucks kann gegenüber dem waagerechten Zylinder 30 ein zusätzlicher Zylinder 60 als Volumenausgleichszylinder angeordnet sein. Mittels dieses zusätzlichen Zylinders 60 kann ein Volumenunterschied ausgeglichen werden (Volumeninhalt des Volumenausgleichszylinders= Fördervolumen). Nach erfolgter Flüssigkeitsrückführung wird der zusätzliche Zylinder 60 zurück gefahren.

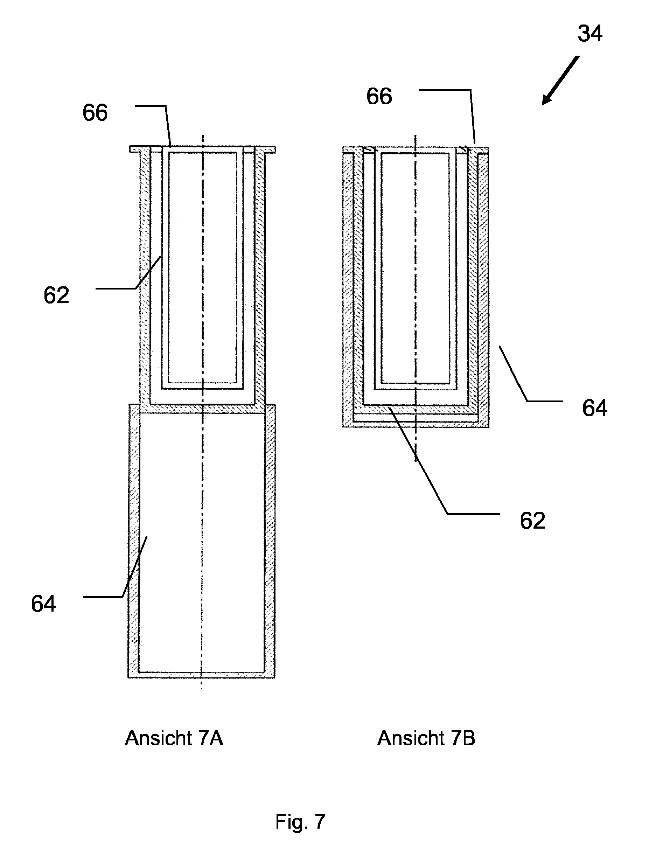

Der variable Schwimmer 34 wird genauer in der **Figur 7** in zwei Ansichten dargestellt. Der Schwimmer 34 besteht aus dem Oberteil 62 und dem Unterteil 64.

Die **Ansicht 7A** zeigt den Zustand des variablen Schwimmers 34 bei der Abwärtsbewegung. Der Schwimmer 34 befindet sich hier in ausgefahrenem Zustand. Am oberen Ende des Schwimmer-Oberteiles 62 befinden sich Öffnungen 66, die bei Bedarf verschließbar sind. Bei der Abwärtsbewegung des Schwimmers 34 befinden sich die Öffnungen 66 in geöffnetem Zustand.

In der **Ansicht 7B** wird der Zustand des Schwimmers 34 bei der Aufwärtsbewegung gezeigt. Hier sind die Öffnungen 66 am oberen Ende des Schwimmer-Oberteiles 62 geschlossen und das Schwimmer-Oberteil 62 wurde in das Schwimmer-Unterteil 64 eingeschoben.

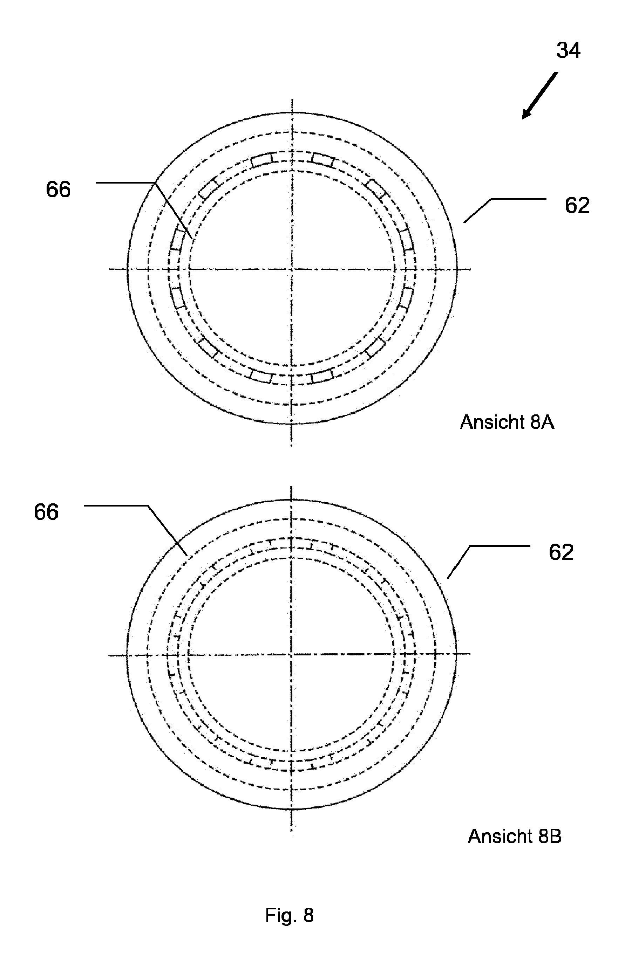

Ergänzend dazu werden in **Figur 8** zwei Draufsichten auf den Schwimmer 34 gezeigt. Die **Ansicht 8A** zeigt dabei eine Draufsicht auf den Schwimmer 34 bei der Abwärtsbewegung, wobei sich die Öffnung 66 am oberen Rand des Schwimmer-Oberteiles 62 in geöffnetem Zustand befindet. In der **Ansicht 8B** befindet sich der Schwimmer 34 bei der Aufwärtsbewegung und die Öffnungen 66 sind geschlossen.

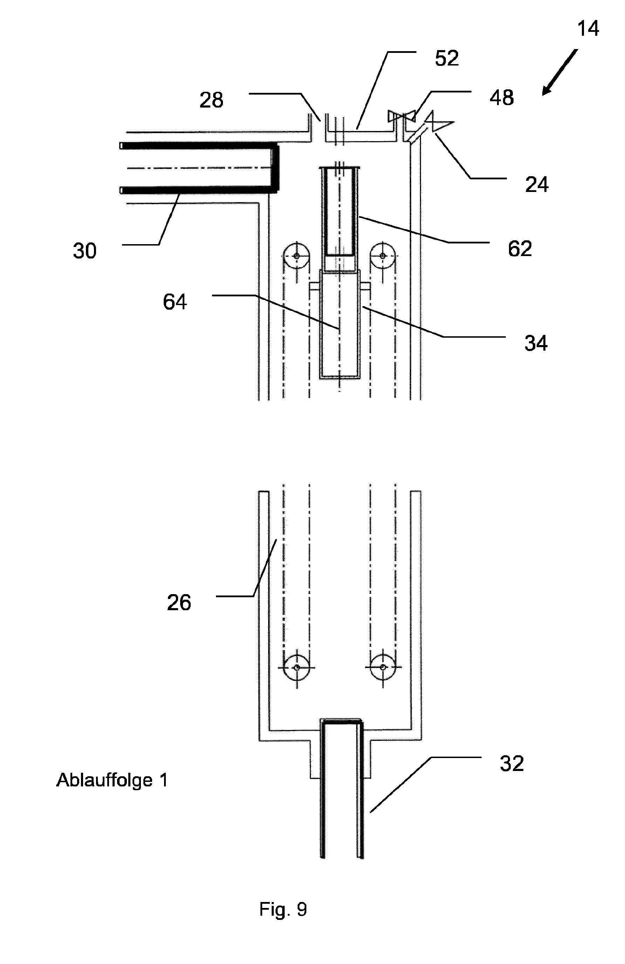

In den folgenden **Figur 9 bis Figur 15** werden verschiedene Phasen (Ablauffolgen 1 bis 7) der Position bzw. des Zustandes des Schwimmers 34 und der Zylinder 30, 32 in der Flüssigkeits-Hebeanlage 14 beim Hebevorgang gezeigt.

**Figur 9** zeigt als Ablauffolge 1 die Stellung von oberem und unterem Zylinder 30, 32 nach einem Hebeablauf. Das Steigrohr 28 ist hier noch geöffnet, der Zulauf 24 und die Entlüftung 48 sind geschlossen. Die Schwimmerbelüftung 52 ist abgekoppelt.

Das Steigrohr 28 kann nun geschlossen werden und die Entlüftung 48 wird geöffnet. Danach wird der ausgefahrene Schwimmer 34 nach unten bewegt. Da hierbei das Schwimmer-Unterteil 64 und das Schwimmer-Oberteil 62 starr miteinander verbunden sind, kann bei der Abwärtsbewegung das Oberteil 62 nicht in das Unterteil 64 einfahren.

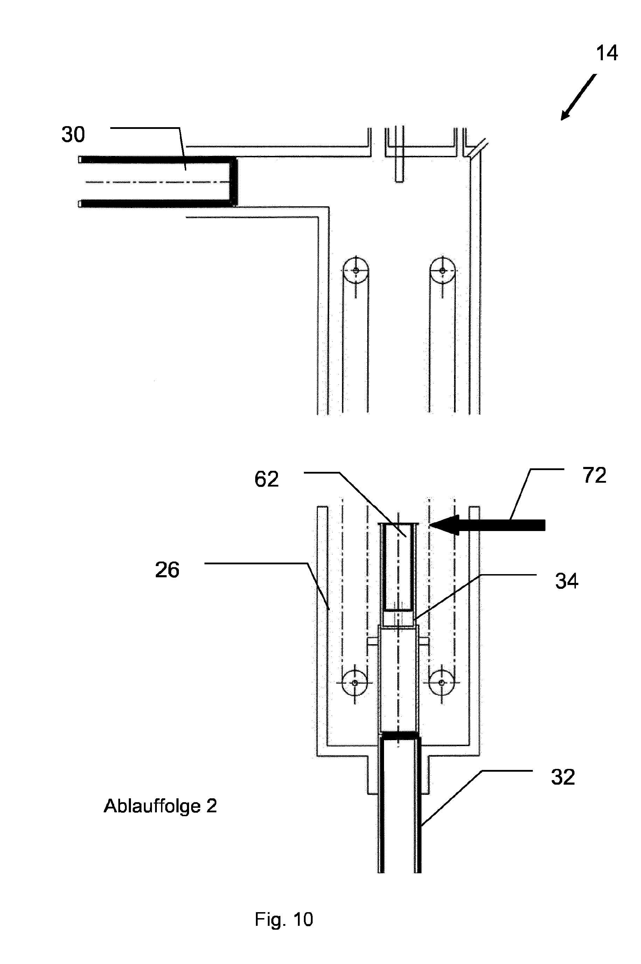

Bei der in **Figur 10** dargestellten Ablauffolge 2 hat der Schwimmer 34 auf den unteren Zylinder 32 aufgesetzt und wird mittels eines Verbindungselementes starr mit dem unteren Zylinder 32 verbunden. Es kann nun kein Flächendruck auf ihn wirken. Zusätzlich wird eine Entlüftung vom Zylinder 32 zum Schwimmer 34 geöffnet. Das Schwimmer-Oberteil 62 wird von außen durch eine Arretierungseinrichtung 72 in der gezeigten Stellung festgehalten und die starre Verbindung zwischen Schwimmer-Unterteil 64 und Oberteil 62 gelöst, sodass ein Zusammenfahren des Schwimmers 34 (Verschieben des Oberteiles 62 in das Unterteil 64) erfolgen kann.

Mittels Antrieb kann der untere Zylinder 32 jetzt nach oben gefahren werden und somit in die erforderliche Ausgangsposition für einen weiteren Hebeablauf bewegt werden. Dabei ist durch das Zusammenfahren des Schwimmers 34 keine Volumenänderung in der Flüssigkeit eingetreten. Dieses erfolgt erst nach dem Hochfahren des Schwimmers 34.

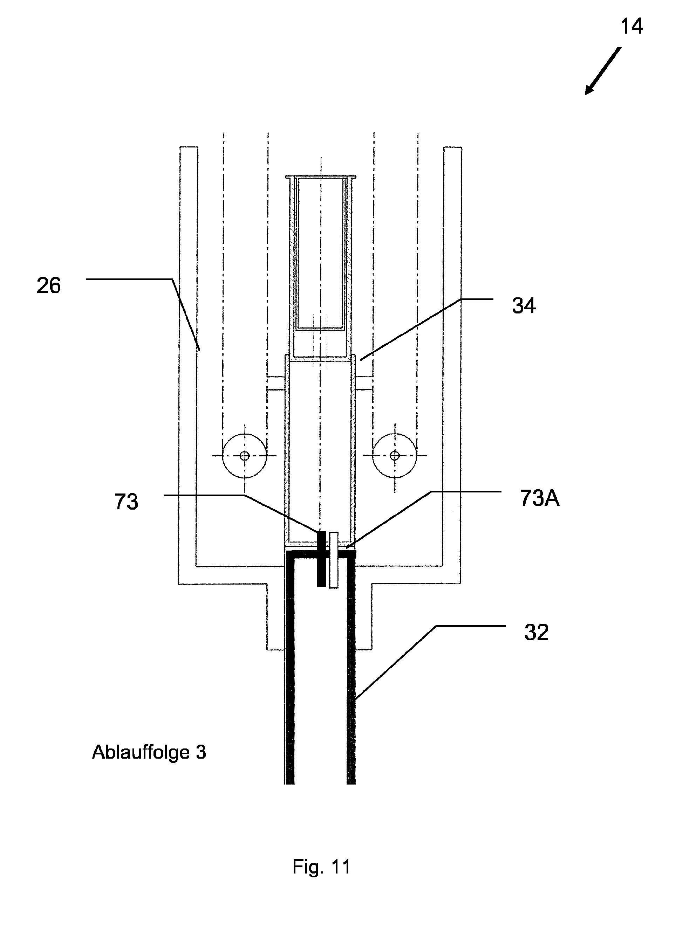

Die in **Figur 11** dargestellte Ablauffolge 3 zeigt die Verbindung zwischen dem Schwimmer 34 und dem unteren Zylinder 32. Zwischen beiden wird zeitweise eine feste Verbindung 73 und eine Luftverbindung 73A nach außen geschaffen, wobei die Luftverbindung 73A die vorhandene Luft ableitet.

Die feste Verbindung 73 (Kopplung) zwischen Schwimmer 34 und unterem Zylinder 32 erlaubt ein Hochfahren des unteren Zylinders 32 mit Unterstützung des variablen Schwimmers ohne großen Kraftaufwand. Es ist lediglich das Gewicht des unteren Zylinders 32 und des Schwimmers 34, sowie der hydrostatische Druck auf den Schwimmerrand zu berücksichtigen.

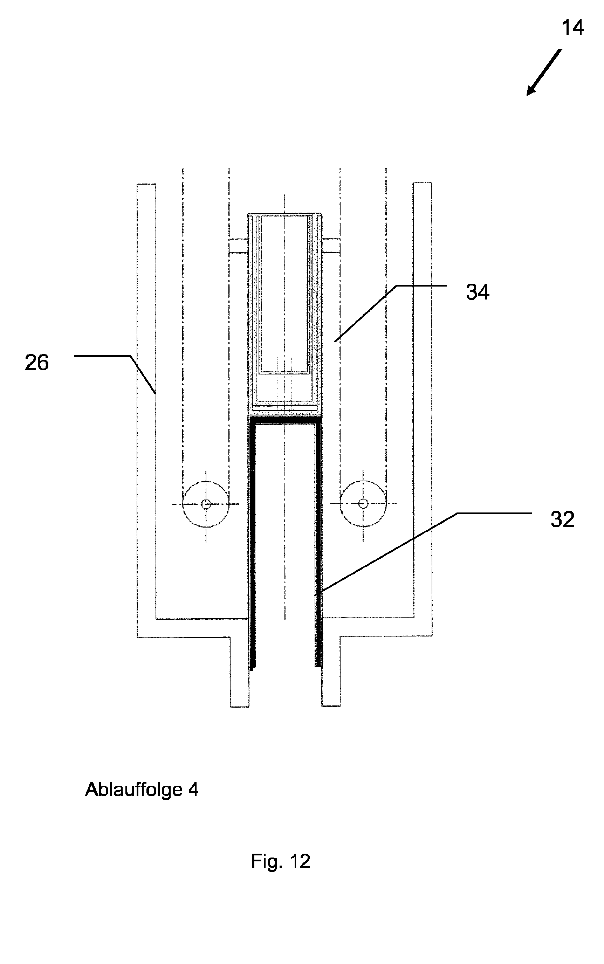

Bei der in **Figur 12** dargestellten Ablauffolge 4 wird der zusammengefahrene variable Schwimmer 34 in der Verbindung mit dem hochgefahrenem unteren Zylinder 32 gezeigt.

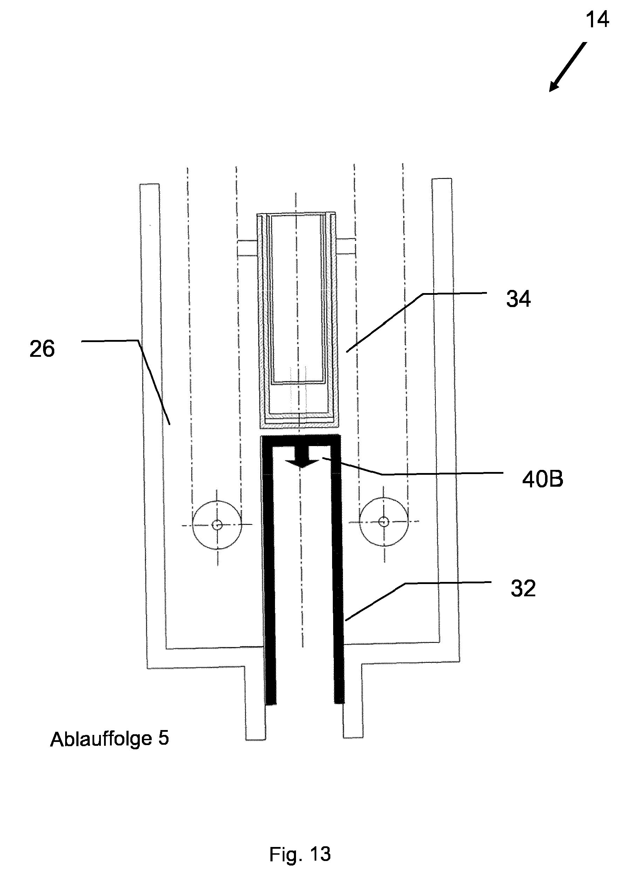

In Ablauffolge 5, die in **Figur 13** dargestellt ist, wurde nun die Verbindung 72 zwischen dem Schwimmer 34 und dem unteren Zylinder 32 gelöst (die Entlüftung ist dabei geschlossen). Der Schwimmer 34 wird nicht mehr am unteren Zylinder 32 festgehalten. Der untere Zylinder 32 fährt in Pfeilrichtung 40 etwas zurück in eine Anschlagposition. Am zusammengefahrenen Schwimmer 34 entsteht dadurch wieder eine untere Druckfläche. Der untere Zylinder 32 wird dann wieder mit dem oberen Zylinder 30 verbunden.

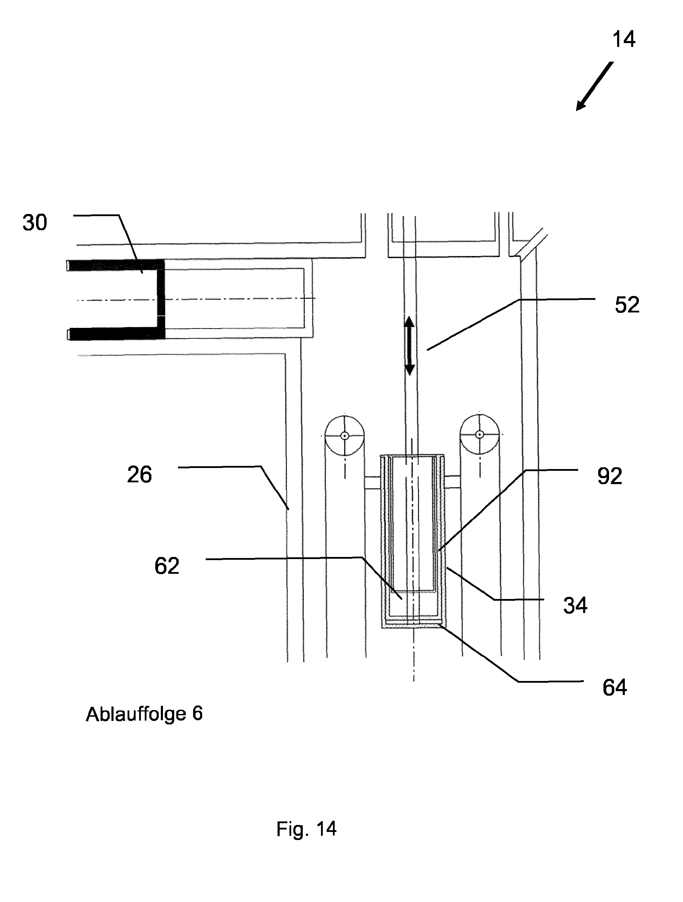

Wenn der zusammengefahrene variable Schwimmer in Ablauffolge 6, dargestellt in **Figur 14,** seine obere Position in der Hebeanlage 14 erreicht hat, dann wird das bewegliche Luftzufuhrrohr 52 auf den Schwimmer 34 gefahren und fest angekoppelt.

Die Luftzufuhr muss dabei von oben in die innere Kammer 92 und von da in den unteren Bereich des variablen Schwimmers 34 erfolgen.

Danach wird das Luftzufuhrrohr 52 nach oben gezogen. Dabei wird der Schwimmer 34 auseinander gezogen, indem das Schwimmer-Oberteil 62 nach oben gezogen wird, während das Schwimmer-Unterteil 64 in seiner Position verbleibt.

Dadurch wird erreicht, dass das Volumen, welches beim Zusammenfahren des Schwimmers 34 im unteren Bereich der Hebeanlage 14 durch das Ausgleichen mit dem unteren Zylinder 32 verloren ging, wieder vorhanden ist. Grund dafür ist der geringe Bodendruck beim Auseinanderfahren im oberen Bereich der Hebeanlage 14, wodurch ein niedriger Arbeitsaufwand erreicht wird.

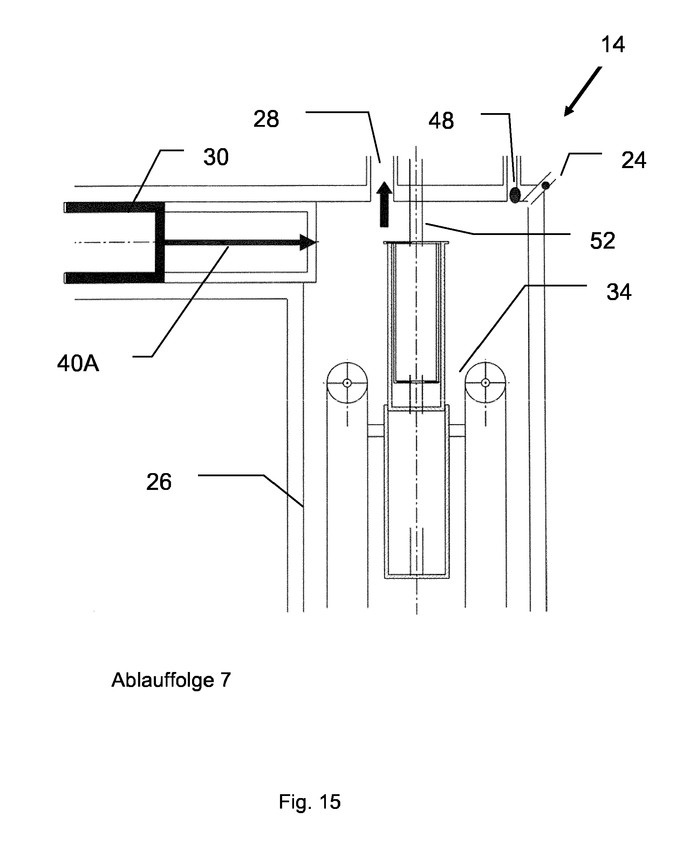

**Figur 15** zeigt in Ablauffolge 7 den ausgefahrenen Schwimmer 34 in seiner oberen Position. Nachdem nun der Schwimmer 34 auseinander gefahren ist, kann das Luftzufuhrrohr 52 abgekoppelt werden. Danach kann aus der Energieerzeugungsanlage erneut über den Zulauf 24 die zu fördernde Wassermenge in die Hebeanlage 14 eingelassen werden. Es folgt dann wieder das Schließen der Entlüftung 48 und das Öffnen des Steigrohrs 28. Mittels der Bewegung (Hub) in Pfeilrichtung 40 der beiden starr miteinander verbundenen Zylinder 30, 32 wird die zugeführte Wassermenge nach oben aus dem Steigrohr 28 gedrückt.

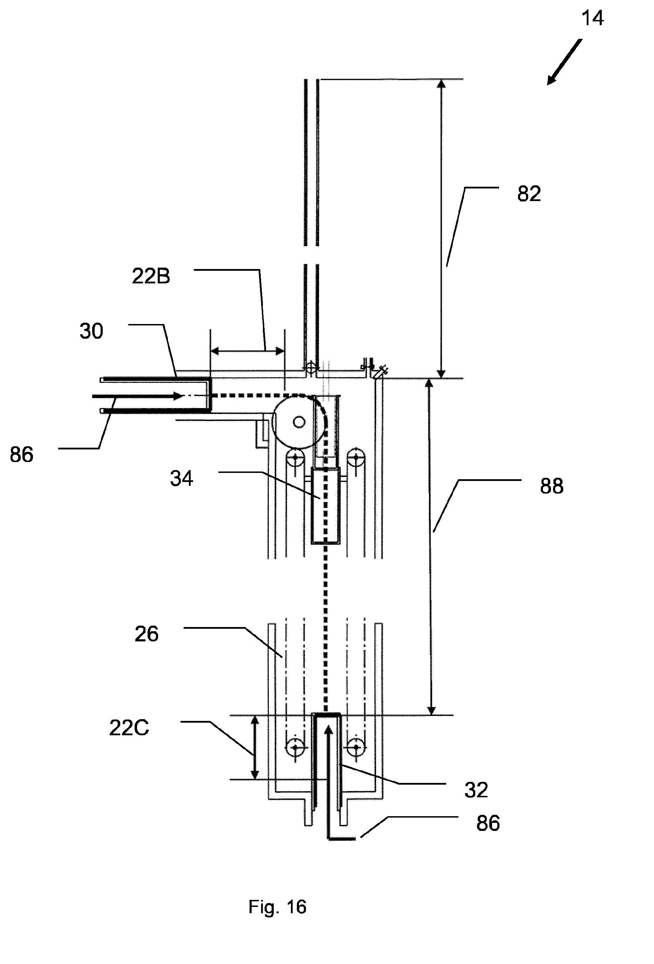

Eine Darstellung der Vorgabenwerte, die für die Berechnung einer Hebeanlage erforderlich sind, findet sich in Figur 16. Um eine Anlage zu entwerfen, müssen folgende Vorgaben vorhanden sein:

- die Förderhöhe 82
- Hub 22B, 22C des oberen bzw. unteren Zylinders 30, 32

- Literangabe für die fördernde Flüssigkeitsmenge
- Literangaben 86 für oberen bzw. unteren Zylinder 30, 32.

Aus den Vorgaben werden folgende Werte errechnet:

- die Durchmesser der Zylinder 30, 32 aus Literangabe 86 und Hub 22B, 22C,
- der Abstand 88 des senkrechten Zylinders 32 zum oberen Rand des Behälters 26 der Hebeanlage 14.

Alle Schwimmerabmaße ergeben sich aus zusätzlichen Angaben, wie Material, Wanddicken usw..

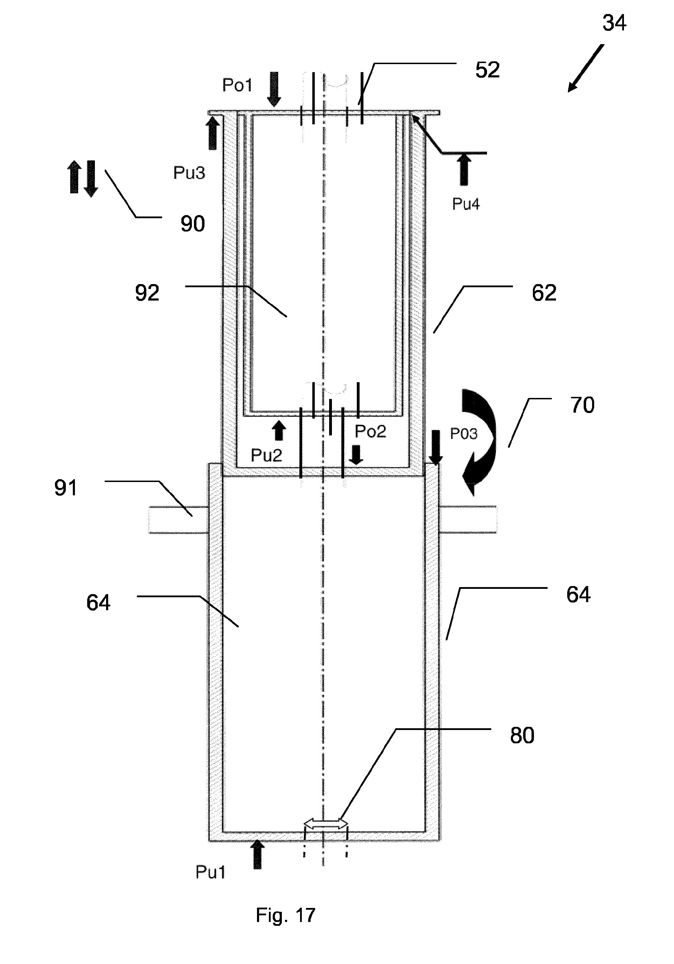

**Figur 17** zeigt detailliert den Zustand eines Beispiels eines ausgefahrenen Schwimmers 34 bei der Abwärtsbewegung.

Auf die mit den Pfeilen 90 symbolisierten Druckflächen wirkt jeweils ein Druck "Po" von oben bzw. ein Druck "Pu" von unten. Ober- und Unterteil 62, 64 des Schwimmers 34 sind über die Verbindung 70 fest miteinander verbunden. Die Bewegungslasche 91 dient zum Halten des Schwimmers 34 durch die Schwimmerverfahreinheit 54.

Im unteren Bereich 80 des Schwimmer-Unterteils 64 ist nach dem Ankoppeln auf den unteren Zylinder 32 ein Luftausgleich erforderlich.

Der in Figur 17 dargestellte Schwimmer 34 wiegt in Magnesium beispielsweise 8 Kilogramm. Man kann somit bei einem genauen Austarieren den Schwimmer 34 für eine Abwärtsbewegung in einen schwerlosen Zustand bringen, wobei Abwärts- und Aufwärtsbewegung hierbei in einem möglichst optimalen Verhältnis stehen sollten.

Folgende konkrete Druckverhältnisse sind bei dem gezeigten Beispiel wirksam:

a) Druck von oben

Po1 = 898 N
Po2 = 550 N
Po3 = 229 N
Gesamt = 1677 N

b) Druck von unten

Pu1 = 1065 N

Pu2 = 392 N

Pu3 = 219 N

Pu4 = 82 N

Gesamt = 1758 N

Die Differenz zwischen dem von oben Druck und dem von unten wirksamen Druck ist somit

$$P_u - P_o = 1758\ N - 1677\ N = 81\ N.$$

Daraus resultiert, dass in diesem Beispiel der Schwimmer für das Erreichen der Schwerelosigkeit mit 81 N ausgeglichen werden muss.

Die entstandene Arbeit (W) bei der Abwärtsbewegung ist hierbei

$$W = 1{,}835\ kgm/sec^2.$$

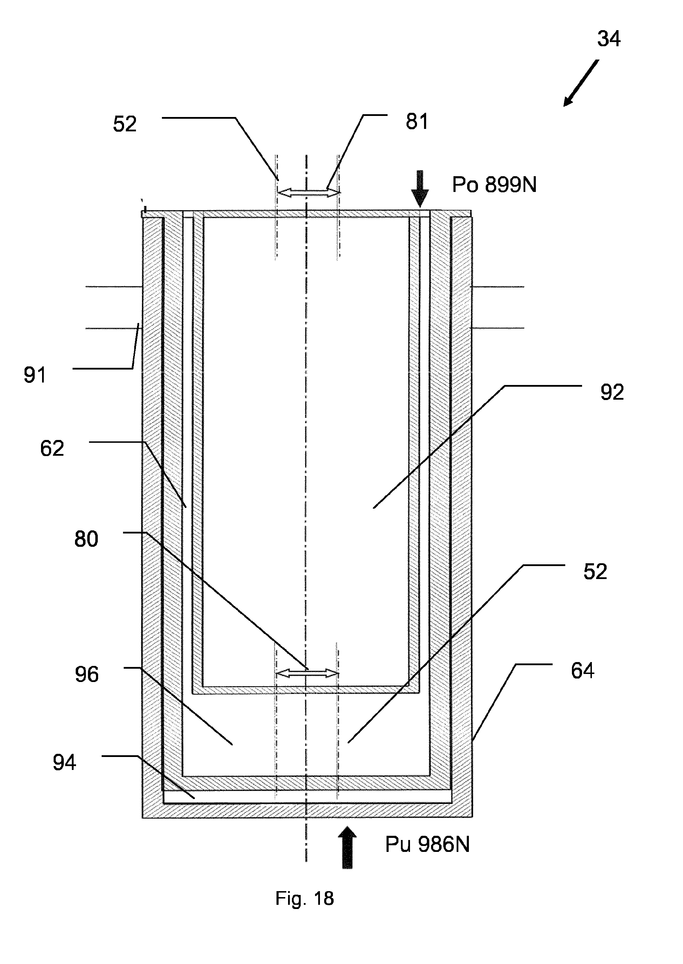

Den detaillierten Zustand des Schwimmers 34 aus Figur17 in zusammengefahrenem Zustand bei der Aufwärtsbewegung zeigt die Figur 18.

Bei der Aufwärtsbewegung sind die Öffnungen 66 am oberen Ende des Schwimmer-Oberteiles 62 geschlossen. Mittels des beweglichen Luftzufuhrrohres 52 kann eine Luftzufuhr erfolgen. Ein Bereich 94 zwischen Ober- und Unterteil 62, 64 des Schwimmers ist mit Luft gefüllt. Der Bereich im Oberteil 62 des Schwimmers 34 ist im dargestellten Ausführungsbeispiel ständig mit Wasser (ca. 1,3 Liter) angefüllt. Wasser bildet in diesem Beispiel den Ballast, der sich bei der Konstruktion des Schwimmers aus den Gewichten und weiteren Randbedingungen ergibt, also aus Material, Wanddicke, Volumengröße der einzelnen Bestandteile.

Folgende konkrete Druckverhältnisse bei der Aufwärtsbewegung des Schwimmers 34 sind bei dem gezeigten Beispiel wirksam:

a) Druck von oben

$$P_o = 899\ N$$

b) Druck von unten

$$P_u = 986\ N$$

Die Differenz zwischen Druck von oben (Po) und Druck von unten (Pu) beträgt somit

$$P_u - P_o = 986\ N - 899\ N = 87\ N$$

Auftrieb.

Bei einem Eigengewicht des Schwimmers in Magnesium von 8 Kg, zuzüglich die 1,3 Liter Wasser im Bereich 96 des Schwimmer-Oberteils 62, ergibt sich ein Gesamtgewicht von 9,3 Kg (ca. 92 N).

Das bedeutet, bei einem Auftrieb von 87 N und einem Gewicht des Schwimmers von 92 N sind aufwärts 5 N nicht ausgeglichen für das Realisieren einer Schwerelosigkeit des Schwimmers. Somit sind bei einem Auftriebsüberschuss von 87 N in Bezug auf die Abwärtskraft von 92 N für den Auftrieb 5 N zu bewegen.

Berechnung einer Beispielanlage mit 4 Litern Arbeitsvolumen

Die Berechnung einer Beispielanlage mit den Daten

- Zylindervolumen = 4 Liter
- Zylinderdurchmesser = 0,112866 m ;
- Hub = 0,4 m
- Druckhöhe = 10 m ;
- Kurbelradius = 1 m ;
- 16 Hübe bei 1 Umdrehung
- 12 Umdrehungen in der Minute  brachte folgendes Ergebnis:

　　　a) beim Anheben von 4 Litern um 10 m muss eine Hubarbeit von 392,4 Nm vollbracht werden.
　　　b) bei 12 Umdrehungen pro Minute werden in dieser Beispielanlage 768 Liter Flüssigkeit angehoben.

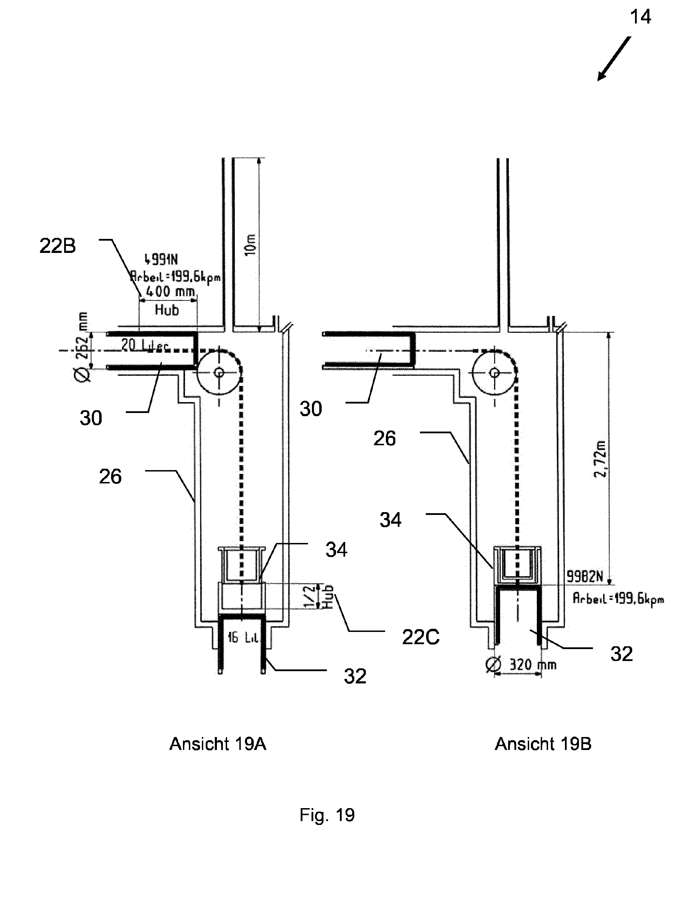

Ein Beispiel einer Hebeanlage 14 mit Untersetzung wird in der Figur 19 gezeigt. Bei dieser Anlage beträgt der Hub 22 des senkrechten Zylinders 32 beispielsweise die Hälfte des Hubs des waagerechten Zylinders. Die Vorteile dieser Ausgestaltung bestehen insbesondere in der Gewichtseinsparung beim Schwimmer und beim unteren Zylinder. Die Ansicht 19A zeigt hierbei die Positionen der beiden Zylinder 30, 32 und des ausgefahrenen Schwimmers 34 nach der Ausführung des Hubes 22. Die **Ansicht 19B** dagegen zeigt die Positionen der beiden Zylinder 30, 32 und des zusammengefahrenen Schwimmers 34 nach der Rückführung der Zylinder 30, 32 in Ausgangspositionen für einen erneuten Hebevorgang.

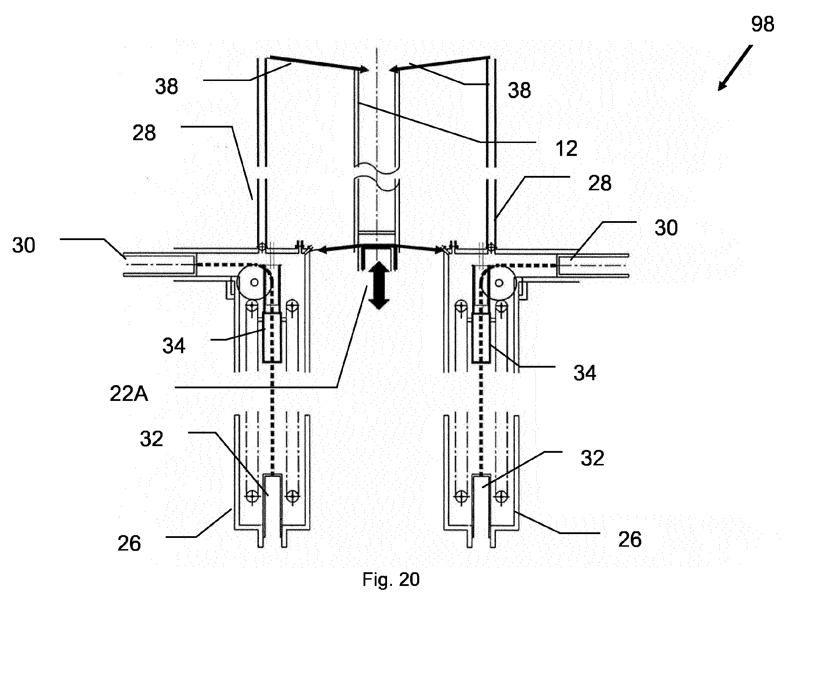

Eine Mehrfach-Hebeanlage 98 zeigt die **Figur 20.** Diese Anlage besteht hierbei aus einer Energieerzeugungsanlage 12 und zwei Flüssigkeits-Hebeanlagen 14. Wie oben bereits beschrieben, fließt bei jedem Hub 22 des Arbeitszylinders der der Energieerzeugungsanlage 12 das Hubvolumen ab, sodass es über den Überlauf 38 auch wieder oben zugeführt werden. Steht nur eine geringe Zeit für den Rückführhub zur Verfügung, so kann das möglicherweise mit nur einer Hebanlage 14 nicht mehr realisiert werden, da der Schwimmer 34 nicht in gleicher Geschwindigkeit bewegt werden kann. In einem solchen Falle können für eine Energieerzeugungsanlage 12 mehrere Hebeanlagen 14 je Arbeitszyklus erforderlich sein.

Wenn man für das oben beschriebene Beispiel einer Flüssigkeits-Hebeanlage 14 mit 4 Liter Arbeitsvolumen beispielsweise eine Zeit von 10 Sekunden für einen Rückführhub annimmt, dann wären hierzu vorhandenen Berechnungen zwei Hebeanlagen je Energiearbeitszylinder erforderlich.

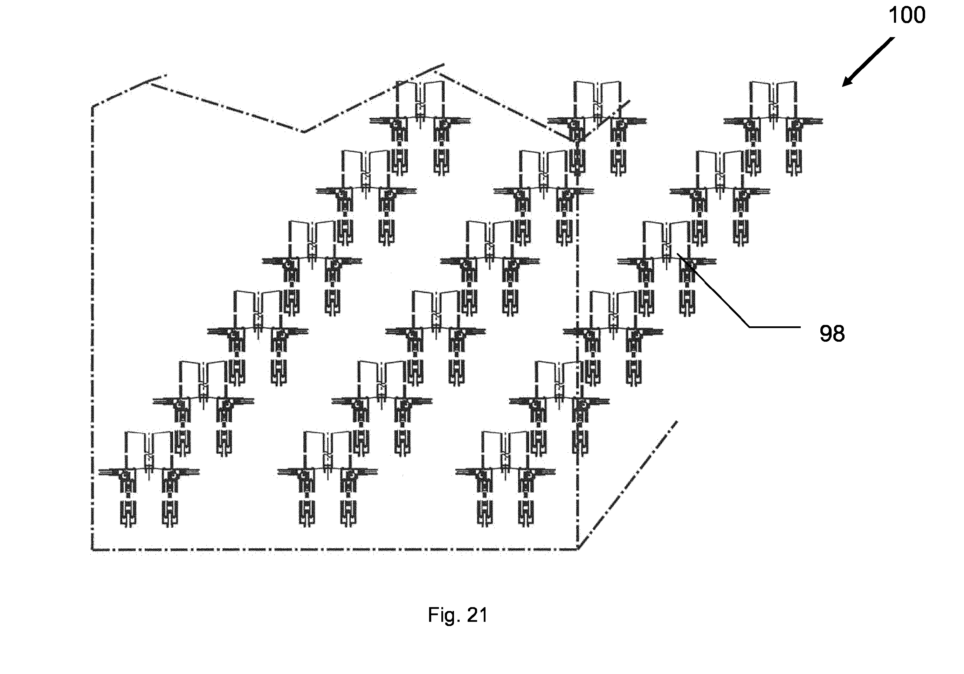

**Figur 21** zeigt ein Beispiel-Anlagenlayout 100 mit einer Vielzahl von Mehrfach-Hebeanlagen 98. Die Vorteile einer solchen Anlage bestehen in der Anordnung in einem geschlossenen Gebäude und in der Unabhängig von vorhandenen Stromnetzen. Sie sind wartungsfreundlich, umweltschonend und weltweit einsetzbar.

**Bezugszeichenliste**

| | |
|---|---|
| 10 | Energieerzeugungsvorrichtung |
| 12 | Energieerzeugungsanlage |
| 14 | Flüssigkeits-Hebeanlage / Rückführung |
| 16 | Druckerzeugungszylinder (Druckerzeugungsbehälter) |
| 18 | Energieerzeugungszylinder (Arbeitszylinder) |
| 20 | Bereich zwischen Druckerzeugungsbehälter und Arbeitszylinder |
| 22A | Hub des Energieerzeugungszylinders (Arbeitszylinders) |
| 22B | Hub des oberen waagerechten Zylinders |
| 22C | Hub des unteren senkrechten Zylinders |
| 24 | Auslauf aus der Energieerzeugungsanlage/ Einlauf in die Flüssigkeits-Hebeanlage |
| 25 | Einlaufventil |
| 26 | Behälter der Flüssigkeits-Hebeanlage |
| 28 | Steigrohr |
| 30 | oberer waagerechter Zylinder |
| 32 | unterer senkrechter Zylinder |
| 34 | variabler Schwimmer |
| 36 | Flüssigkeit |
| 38 | Überlauf in Energieerzeugungsanlage |
| 40A | Angabe der Bewegungsrichtung des oberen waagerechten Zylinders bei der Ausführung eines Hubes |
| 40B | Angabe der Bewegungsrichtung des unteren senkrechten Zylinders bei der Ausführung eines Hubes |
| 41 | Generator |
| 42 | Verbindungselement |
| 44 | Steigrohrventil |
| 46 | Durchmesser |
| 48 | Entlüftungsventil |
| 50 | Umlenkrollen für Verbindungselement |
| 52 | Luftzufuhreinheit für variablen Schwimmer |
| 54 | Schwimmerverfahreinheit |
| 56 | Zylinderanbindung für Verbindungselement zwischen waagerechtem und senkrechtem Zylinder |
| 60 | Volumenausgleichszylinder Schwimmer-Oberteil |
| 62 | Schwimmer-Oberteil Schwimmer-Unterteil |
| 64 | Schwimmer-Unterteil |

| | |
|---|---|
| 66 | Öffnungen am Schwimmer-Oberteil |
| 68 | Schwimmer-Unterteil |
| 70 | feste Verbindung zwischen Schwimmer-Unterteil und Oberteil |
| 72 | Arretierungseinrichtung für Schwimmer-Oberteil |
| 73 | feste Verbindung zwischen Schwimmer und senkrechtem Zylinder |
| 73A | Entlüftung zwischen Schwimmer und senkrechtem Zylinder |
| 80 | unterer Bereich des variablen Schwimmers |
| 81 | Luftzuführung durch die Luftzuführeinheit 52 |
| 82 | Förderhöhe |
| 84 | Literangabe der zu fördernden Flüssigkeitsmenge |
| 86 | Literangaben für oberen und unteren Zylinder |
| 88 | Abstand |
| 90 | Druckflächen |
| 91 | Bewegungslasche |
| 92 | innere Kammer des Schwimmer-Oberteils |
| 94 | mit Luft angefüllter Bereich zwischen Schwimmer-Oberteil und Unterteil |
| 96 | mit Wasser angefüllter Bereich des Schwimmer-Oberteils |
| 98 | Mehrfachhebeanlage |
| 100 | Anlagenlayout |

**Patentansprüche**

1. Energieerzeugungsvorrichtung (10) zur Energiegewinnung durch Ausnutzung eines hydrostatischen Druckes in einer Flüssigkeit, **dadurch gekennzeichnet,**

    a) **dass** die Energieerzeugungsvorrichtung (10) folgendes aufweist:

        a1) mindestens eine Energieerzeugungsanlage (12) mit:

            a11) mindestens einem Druckerzeugungsbehälter (16) und
            a12) mindestens einem Energieerzeugungszylinder (18);
        a2) mindestens eine Flüssigkeits-Hebeanlage (14) für ein Anheben und Rückführen von Flüssigkeit in die Energieerzeugungsanlage (12) mit:

            a21) einem oberen waagerechten Zylinder (30) und einem unteren senkrechten Zylinder (32), wobei der obere waagerechte Zylinder (30) und der untere senkrechte Zylinder (32) mittels eines Verbindungselementes (42) fest miteinander verbindbar sind;
            a22) einem variablen Schwimmer (34);
            a23) einer Schwimmerverfahreinheit (54);
            a24) einem Steigrohr (28) mit einem Sperrventil (44); und
            a25) einer beweglichen Luftzufuhreinheit (52) für den variablen Schwimmer (34);

    b) **dass** zwischen der Energieerzeugungsanlage (12) und der Flüssigkeits-Hebeanlage (14) ein Auslauf (24) für ein Abführen einer Flüssigkeitsmenge aus der Energieerzeugungsanlage (12) in die Flüssigkeits-Hebeanlage (14) vorhandenen ist;
    c) **dass** zwischen dem Steigrohr (28) der Flüssigkeits-Hebeanlage (14) und der Energieerzeugungsanlage (12) ein Überlauf (38) für ein erneutes Einbringen einer Flüssigkeitsmenge aus der Flüssigkeits-Hebeanlage (14) in die Energieerzeugungsanlage (12) vorhanden ist;
    d) **dass** die Flüssigkeits-Hebeanlage (14) derart ausgestaltet ist, dass mittels einer Antriebsvorrichtung die Ausführung eines Hubes (22B) des oberen waagerechten Zylinders (30) und eines Hubes (22C) des unteren senkrechten Zylinders (32) bewirkt wird;

        d1) wobei eine aus der Energieerzeugungsanlage (12) in die Flüssigkeits-Hebeanlage (14) abgeführte Flüssigkeitsmenge in das Steigrohr (28) gedrückt wird und von dort durch den Überlauf (38) erneut in die Energieerzeugungsanlage (12) einbringbar ist; und

    e) **dass** die Flüssigkeits-Hebeanlage (14) derart ausgestaltet ist, dass mittels des variablen Schwimmers (34) ein Rückführen des unteren Zylinders (32) in eine Ausgangsposition für einen erneuten Hebelauf erfolgt;

        e1) wobei der variable Schwimmer (34) mit dem senkrechten Zylinder (32) verbindbar ist;
        e2) wobei der variable Schwimmer (34) ein zylinderförmiges Unterteil (62) und ein zylinderförmiges Oberteil (64) aufweist;
        e3) wobei das zylinderförmige Oberteil (64) in Bezug auf das zylinderförmige Unterteil (62) derart ausgebildet ist, dass es in das zylinderförmige Unterteil (64) einfügbar ist und dadurch ein ineinander Verschieben von Oberteil (62) und Unterteil (64) realisierbar ist;
        e4) wobei mittels des ineinander Verschiebens des Oberteils (62) in das Unterteil (64) eine Änderung der Form und Größe des variablen Schwimmers (34) bewirkbar ist; und
e5) wobei durch ein Hochfahren bzw. Absenken mittels der Schwimmerverfahreinheit (54) eine Höhenposition des variablen Schwimmers (34) innerhalb der Flüssigkeit (36) veränderbar ist; und
e6) wobei durch die Veränderung von Form und Größe des variablen Schwimmers (34) ein Anheben des unteren senkrechten Zylinders (32) in die Ausgangsposition für einen erneuten Flüssigkeits-Hebevorgang bei einem nur geringen externen Energiebedarf realisierbar ist.

2. Energieerzeugungsvorrichtung (10) nach dem vorhergehenden Anspruch,
**dadurch gekennzeichnet,**

a) **dass** der variable Schwimmer (34) der Flüssigkeits-Hebeanlage (14) nahezu schwerelos konzipiert ist.

3. Energieerzeugungsvorrichtung (10) nach einem der vorhergehenden Ansprüche,
**dadurch gekennzeichnet,**
**dass** der variable Schwimmer (34), bezogen auf den Durchmesser des unteren senkrechten Zylinders (32) der Flüssigkeits-Hebeanlage (14), einen gleichen Durchmesser aufweist.

4. Energieerzeugungsvorrichtung (10) nach einem der vorhergehenden Ansprüche,
**dadurch gekennzeichnet,**
**dass** der variable Schwimmer (34), bezogen auf den Durchmesser des unteren senkrechten Zylinders (32) der Hebeanlage (14), einen größeren Durchmesser aufweist.

5. Energieerzeugungsvorrichtung (10) nach einem der vorhergehenden Ansprüche 1,
**dadurch gekennzeichnet,**
**dass** die Flüssigkeits-Hebeanlage (14) derart ausgestaltet ist, dass sie eine Untersetzung des Hubes (22C) des senkrechten Zylinders (32) in Bezug auf den Hub (22B) des waagerechten Zylinders (30) aufweist.

6. Energieerzeugungsvorrichtung (10) nach einem der vorhergehenden Ansprüche,
**dadurch gekennzeichnet,**
**dass** die Energieerzeugungsanlage (10) eine Mehrzahl von zugeordneten Flüssigkeits-Hebeanlage (14) aufweist.

7. Energieerzeugungsvorrichtung (10) nach einem der vorhergehenden Ansprüche,
**dadurch gekennzeichnet,**
**dass** die Energieerzeugungsvorrichtung (10) eine Mehrzahl von Energieerzeugungsanlagen (12) und eine Mehrzahl von zugeordneten Flüssigkeits-Hebeanlagen (14) aufweist,

a) wobei die mehreren Energieerzeugungsanlagen (12) in Reihe miteinander gekoppelt sind, und
b) wobei mittels dieser Anordnung einer Mehrzahl von Energieerzeugungsanlagen (12) eine Drehbewegung eines an die Energieerzeugungsvorrichtung (10) gekoppelten Generators (41) eine Erzeugung von elektrischer Energie realisierbar ist.

8. Verfahren zur Energiegewinnung durch Ausnutzung eines hydrostatischen Druckes in Flüssigkeiten in einer Energieerzeugungsvorrichtung (10),
wobei die Energieerzeugungsvorrichtung (10), mindestens eine Energieerzeugungsanlage (12) und mindestens eine Flüssigkeits-Hebeanlage (14) aufweist, mit folgenden Schritten:

a) in der mit einer Flüssigkeit angefüllten Energieerzeugungsanlage (12) führt ein Energieerzeugungszylinder (18) einen definierten Hub (22A) aus;

a1) wobei der Hub (22A) durch eine in der Energieerzeugungsanlage (12) mittels eines Druckerzeugungszylinders (16) realisierte Bodenkraft und/oder Seitenkraft bewirkt wird;
a2) wobei beim Ausführen des Hubes (22A) durch den Energieerzeugungszylinder (18) eine Arbeit vollbracht wird und eine Bewegungsenergie erzeugt wird;
a3) wobei die von der Energieerzeugungsanlage (12) erzeugte Bewegungsenergie an eine angekoppelten externe Vorrichtung, vorzugsweise einen Generator (41) zur Erzeugung einer elektrischen Energie, übertragen wird;

b) nach dem Ausführen des Hubes (22A) durch den Energieerzeugungszylinder (18) erfolgt über einen Auslauf (24) ein Abführen einer definierten Flüssigkeitsmenge aus der Energieerzeugungsanlage (12) in die mit Wasser gefüllte Flüssigkeits-Hebeanlage (14);
c) in der Flüssigkeits-Hebeanlage (14) wird mittels eines Antriebes ein Hub (22B) eines waagerechten Zylinders (30) und eines mit dem waagrechten Zylinder (30) verbundenen senkrechten Zylinders (32) bewirkt, wodurch ein Anheben der Flüssigkeit (36) in der Flüssigkeits-Hebeanlage (14) erfolgt;

c1) wobei die beiden Zylinder (30, 32) vor Ausführung des Hubes (22B, 22C) in einer dafür definierten Ausgangsposition angeordnet waren;

d) über ein Steigrohr (28) erfolgt eine Rückführung von Flüssigkeit (36) aus der Flüssigkeits-Hebeanlage (14) in den Druckerzeugungszylinder (16) der Energieerzeugungsanlage (12);

d1) wobei die für die Rückführung angehobenen Flüssigkeitsmenge der aus der Energieerzeugungsanlage (12) abgeführten Flüssigkeitsmenge entspricht;

e) der waagerechte und der senkrechte Zylinder (30, 32) werden wieder in eine Ausgangsposition für eine erneute Ausführung eines Hubes (22B, 22C) bewegt;

e1) wobei das Bewegen des senkrechten Zylinders (32) in die Ausgangsposition mittels eines nach Form, Größe und Position variablen, nahezu schwerelos ausgebildeten Schwimmers (34) erfolgt;

e2) wobei für das Bewegen des senkrechten Zylinders (32) in die Ausgangsposition der variable Schwimmer (34) mit dem senkrechten Zylinder (32) verbunden und zusammen mit dem senkrechten Zylinder (32) nach oben in die Ausgangsposition bewegt wird; und

e3) wobei das Bewegen des variablen Schwimmers (34) nach oben mittels einer Schwimmerverfahreinheit (54) realisiert wird;

f) nach erfolgter Einnahme der Ausgangsposition durch den waagerechten Zylinder (30) und durch den senkrechten Zylinder (32) werden die Schritte a) bis e3) erneut ausgeführt.

9. Verfahren zur Energiegewinnung durch Ausnutzung eines hydrostatischen Druckes in Flüssigkeiten in einer Energieerzeugungsvorrichtung (10) nach dem vorhergehenden Anspruch,
**dadurch gekennzeichnet,**

a) **dass** das Verfahren mittels einer Mehrzahl von in Reihe nacheinander angeordneten Energieerzeugungsanlagen (12) ausgeführt wird, wobei jeder der Energieerzeugungsanlagen (12) mindestens eine Flüssigkeits-Hebeanlage (14) zugeordnet ist; und

b) **dass** eine Drehbewegung eines mit den Energieerzeugungsanlagen (12) gekoppelten externen Energiewandlers, vorzugsweise eines Generators (41), erzeugt wird.

Fig. 1

Ansicht 2C

Ansicht 2A

Ansicht 2B

Fig. 2

EP 2 667 015 A2

Fig. 3

Fig. 4

Ansicht 5A          Ansicht 5B

Fig. 5

Ansicht 6A          Ansicht 6B          Ansicht 6C

Fig. 6

EP 2 667 015 A2

34

66

62

64

66

64

62

Ansicht 7A

Ansicht 7B

Fig. 7

34

66

62

Ansicht 8A

66

62

Ansicht 8B

Fig. 8

Ablauffolge 1

Fig. 9

14

30

62 72

26 34

32

Ablauffolge 2

Fig. 10

14

26

34

73

73A

32

Ablauffolge 3

Fig. 11

14

34

26

32

Ablauffolge 4

Fig. 12

14

34

26

40B

32

Ablauffolge 5

Fig. 13

Ablauffolge 6

Fig. 14

Ablauffolge 7

Fig. 15

Fig. 16

Fig. 17

Fig. 18

Ansicht 19A                    Ansicht 19B

Fig. 19

Fig. 20

EP 2 667 015 A2

100

98

Fig. 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202007010685 U1
- DE 102007060449 A1
- DE 102007063509 A1